# EUROPÄISCHE PATENTANMELDUNG

(11) **EP 1 760 128 A1**
(43) Veröffentlichungstag der Anmeldung: **07.03.2007**
(21) Anmeldenummer: 05108072.9
(22) Anmeldetag: 02.09.2005
(51) Int. Cl.: C09J 1/00, C07F 7/18

(54) **Wässrige zweikomponentige Organoalkoxysilanzusammensetzung**

(71) Anmelder: Sika Technology AG, 6340 Baar (CH)
(72) Erfinder: Sutter, Jolanda, 4310, Rheinfelden (CH); Huck, Wolf-Rüdiger, 8044, Zürich (CH)
(74) Vertreter: Isler, Jörg

(57) **Zusammenfassung**

Die vorliegende Erfindung betrifft wässrige zweikomponentige Haftvermittlerzusammensetzungen sowie deren Verwendung in Verfahren zum Verkleben oder zum Abdichten. Weiterhin betrifft sie eine Packung bestehend aus der zweikomponentigen Zusammensetzung sowie einer Verpackung mit zwei Kammern. Die zweikomponentige Haftvermiftlerzusammensetzung besteht aus einer ersten Komponente **K1** umfassend mindestens ein Organoalkoxysilan **S** und mindestens ein wasserfreies Tensid **T**; und aus einer zweiten Komponente **K2** umfassend mindestens Wasser und mindestens eine Säure, wobei die Säure in einer Menge vorhanden ist, dass nach dem Mischen der Komponenten **K1** und **K2** die resultierende Mischung sauer ist.

## Beschreibung

### Technisches Gebiet

Die vorliegende Erfindung betrifft das Gebiet der wässrigen zweikomponentigen Organoalkoxysilanzusammensetzungen und insbesondere das Gebiet der wässrigen Haftvermittler zur Verbesserung der Haftung von Kleb- und Dichtstoffen.

### Stand der Technik

Es ist bekannt, dass bei Klebstoffen und Dichtstoffen die Haftung bei gewissen Substraten schwierig zu erreichen ist. Derartige Substrate müssen deshalb einer Vorbehandlung unterzogen werden. Eine häufig verwendete Methode ist die Vorbehandlung mittels Primer oder Haftvermittlerzusammensetzungen. Die Verwendung von Organoalkoxysilane, vielfach auch einfach Silane genannt, ist hierfür schon lange bekannt. Derartige Primer oder Haftvoranstrichen weisen jedoch üblicherweise grosse Mengen an Lösungsmittel auf. Aufgrund von ökologischen und arbeitssicherheitstechnischen Gründen sind derartige Lösungsmittel basierende Vorbehandlungsmittel zunehmend unerwünscht. Es wird deshalb angestrebt, wässrige Organoalkoxysilanzusammensetzungen als Primer oder Haftvermittlerzusammensetzungen herzustellen.
Organoalkoxysilane, insbesondere hydrophobe Organoalkoxysilane, sind schwierig mit Wasser zu mischen. Es bilden sich vielfach zwei Phasen, an deren Grenzfläche sich Trübungen und Ausflocken zeigen. Für einen praxistauglichen Haftvermittler, muss der Haftvermittler aber homogen sein.
Es liegt jedoch in der Natur der Organoalkoxysilane, dass sie mit Wasser reagieren. Die Alkoxysilangruppen hydrolisieren mit Wasser zu Silanolen (Si-OH-Gruppen). Silanole können anschliessend zu Siloxanen (Si-O-Si-Gruppen) kondensieren. Derartige Siloxane sind jedoch meistens nicht mehr löslich und fallen aus, was zu unerwünschten Trübungen und Niederschlägen führt. Deshalb sind wässrige Organoalkoxysilanzusammensetzungen nur sehr kurz lagerfähig.
US 6,511, 752 B2 offenbart einen wässrigen Primer, welcher aus einem Aminotitanat, Epoxysilan sowie Wasser hergestellt wurde, und welcher über eine lange Haltbarkeit verfügt.
US 6,294, 620 B1 zeigt einen wässrigen Emulsionsprimer, welcher bei einem neutralen pH in einem zwei Schritt-Verfahren in einem hochtourigen Mischer aus wasserunlöslichen Ethoxysilanen in Gegenwart eines Emulgators hergestellt wird.
Bei der Herstellung dieser wässrigen Primer sind jedoch enge Grenzen in Bezug auf die Organoalkoxysilanzusammensetzungen gegeben beziehungsweise sind sehr aufwändig in der Herstellung.

### Darstellung der Erfindung

Aufgabe der vorliegenden Erfindung ist es daher, eine wässrige Haftvermittlerzusammensetzung zur Verfügung zu stellen, welche breit einsetzbar ist und durch eine einfache Methode zubereitet werden kann.
Überraschenderweise wurde gefunden, dass eine zweikomponentige Haftvermittlerzusammensetzung gemäss Anspruch 1 dieses Problem löst.
Die zwei Komponenten **K1** und **K2** sind unvermischt äusserst lagerstabil. Die Komponente **K1** weist gegenüber üblichen Organoalkoxysilanzusammensetzungen eine deutlich geringere Feuchtigkeitsempfindlichkeit auf, so dass geringe Mengen an Feuchtigkeit, wie sie beispielsweise durch schlecht verschlossene Gebinde oder durch Verwendung von Gebinden aus Kunststoffen, welche bekanntermassen nicht wasserdiffusiondicht sind, verursacht werden, gut toleriert werden können.
Die gebrauchsfertige Haftvermittlerzusammensetzung wird durch simples Schütteln der zwei Komponenten hergestellt. Somit stellt die zweikomponentige Haftvermittlerzusammensetzung ein Vorbehandlungssystem dar, welches gebrauchssicher und einfach in der Anwendung ist und auch von ungeschulten Anwendern verwendet und zubereitet werden kann. Somit sind auch Packungen bestehend aus einer Zweikomponenten-Verpackung mit zwei durch mindestens eine Trennwand voneinander getrennten Kammern, in welche die zwei Komponenten der wässrigen Haftvermittlerzusammensetzung gepackt sind, möglich, welche für den Laien ein sicheres und einfaches System der Applikation darstellt.
Zudem wurde gefunden, dass die Haftvermittlerzusammensetzung auch nach dem Mischen noch für längere Zeit, typischerweise bis zu Wochen, verwendet werden kann, ohne dass Probleme mit der Haftung auftreten

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Die Richtung von Kräften sind mit Pfeilen angegeben.

Es zeigen:
- Fig. 1: einen Querschnitt durch eine Ausführungsform **P1** mit einer brechbaren Trennwand,
- Fig.: 2 einen Querschnitt durch eine Ausführungsform **P2** mit einem Bersthilfsmittel, insbesondere mit einem Schneidmittel,
- Fig.: 3 einen Querschnitt durch eine Ausführungsform **P3** mit einer Dichtung,
- Fig. 4: einen Querschnitt durch eine Ausführungsform **P4** mit einer heraus reissbaren Trennwand,
- Fig. 5-9: einen Querschnitt durch bevorzugte Ausführungsformen von **P1**
- Fig. 10: einen Querschnitt durch bevorzugte Ausführungsformen von **P2**
- Fig. 11: einen Querschnitt durch bevorzugte Ausführungsformen von **P4**

Es sind nur die für das unmittelbare Verständnis der Erfindung wesentlichen Elemente gezeigt. Bewegungen und Drücke sind durch Pfeile angegeben.

### Wege zur Ausführung der Erfindung

Die vorliegende Erfindung betrifft wässrige zweikomponentige Haftvermittlerzusammensetzung bestehend aus einer ersten Komponente **K1** und aus einer zweiten Komponente **K2.** Die erste Komponente **K1** enthält hierbei mindestens ein Organoalkoxysilan **S** und mindestens ein wasserfreies Tensid **T.** Die zweite Komponente **K2** umfassend enthält mindestens Wasser und mindestens eine Säure. Es ist wesentlich, dass die Menge der Säure so gewählt ist, dass nach dem Mischen der zwei Komponenten die **K1** und **K2** die resultierende Mischung sauer ist. Das bedeutet, dass der pH einer derartigen Mischung kleiner als 7 ist. Der bevorzugte pH einer derartigen Mischung liegt zwischen 3 und 5, insbesondere zwischen 3.5 bis 4.5.
Der Term "wasserfrei" ist im vorliegenden Dokument nicht als "absolut frei von Wasser" auszulegen. Es werden deshalb auch Verbindungen und Zusammensetzungen als "wasserfrei" bezeichnet, welche geringe Spuren von Wasser enthalten, d.h. welche einen Restwassergehalt von maximal 1 Gew.-%, insbesondere von maximal 0.5 Gew.-% enthalten.
Mit dem Begriff "Organoalkoxysilan" oder kurz "Silan" werden im vorliegenden Dokument Verbindungen bezeichnet, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen und keine Si-O-Si-Bindungen aufweisen. Entsprechend dazu bezeichnet der Begriff "Silangruppe" die an den organischen Rest des Organoalkoxysilans gebundene Silicium-haltige Gruppe. Die Organoalkoxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).
Mit Begriffen wie "Aminosilan", "Epoxysilan", "Alkylsilan", "(Meth)acrylatosilan" und "Mercaptosilan" werden Silane bezeichnet, welche die entsprechende funktionelle Gruppe aufweisen, hier also ein Aminoalkylalkoxysilan, Epoxyalkylalkoxysilan, Alkylalkoxysilan, (Meth)acrylatosilan und Mercaptoalkylalkoxysilan.

Organoalkoxysilane **S** sind insbesondere Aminosilane, Epoxysilane, Mercaptosilane, (Meth)acrylatosilan und Alkylsilane.

Als Aminosilane sind insbesondere Aminosilane der Formel (I) oder die Reaktionsprodukte der Formel (I), welche mindestens eine sekundäre oder primäre Aminogruppe aufweist, mit einer Verbindung (**ARV**), welche mindestens eine funktionellen Gruppe, welche mit einer primären oder sekundären Aminogruppe reagieren kann, enthält.

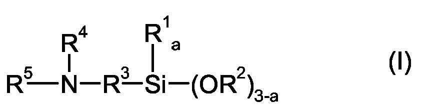

Hierbei steht R¹ für eine Alkylgruppe mit 1 bis 8 C-Atomen, bevorzugt für eine Methyl- oder für eine Ethylgruppe. R¹ steht vorzugsweise für eine Methylgruppe.

Weiterhin steht R² für eine Alkylgruppe mit 1 bis 5 C-Atomen, bevorzugt für eine Methylgruppe oder für eine Ethylgruppe oder für eine Isopropylgruppe. R² steht vorzugsweise für eine Methylgruppe oder für eine Ethylgruppe.
Weiterhin steht R³ für eine lineare oder verzweigte Alkylengruppe mit 1 bis 4 C-Atomen. R³ steht vorzugsweise für eine Propylengruppe.
Weiterhin steht R⁴ für H oder eine lineare oder verzweigte Alkylengruppe mit 1 bis 10 C-Atomen oder für einen Substituent der Formel (II)

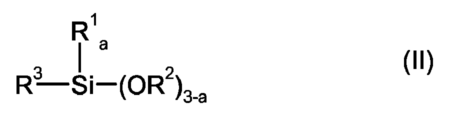

Weiterhin steht R⁵ für H oder eine lineare oder verzweigte Alkylengruppe mit 1 bis 10 C-Atomen oder für eine lineare oder verzweigte Alkylengruppe mit 1 bis 10 C-Atomen mit weiteren Heteroatomen oder für einen Substituent der Formel (II)

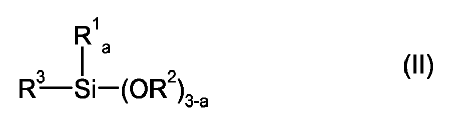

Als besonders vorteilhaften Rest einer linearen Alkylengruppe mit 1 bis 10 C-Atomen mit weiteren Heteroatomen R⁵ gilt der Rest CH₂CH₂NH₂.
Schliesslich steht der Index a für einen Wert 0, 1 oder 2, insbesondere für 0 oder 1. Bevorzugt steht a für 0.
Beispiele für derartige Aminosilane der Formel (I) sind 3-Aminopropyl-trimethoxysilan, 3-Aminopropyl-dimethoxymethylsilan, 3-Amino-2-methylpropyltrimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyltrimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan, N-Ethyl-3-Aminopropyl-dimethoxy-methylsilan, N-Phenyl-4-Aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethyl-aminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, Bis(trimethoxysilylpropyl)amin, Tris(trimethoxysilylpropyl)amin sowie deren Analoga mit Ethoxy- oder Isopropoxygruppen anstelle der Methoxygruppen am Silicium.
Bevorzugte Aminosilane der Formel (I) sind Aminosilane, welche ausgewählt sind aus der Gruppe umfassend Aminosilane der Formel (III), (IV) und (V).

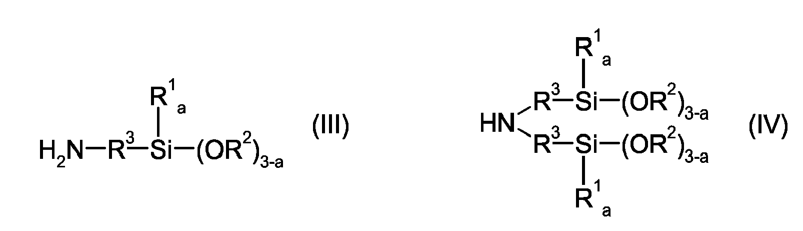

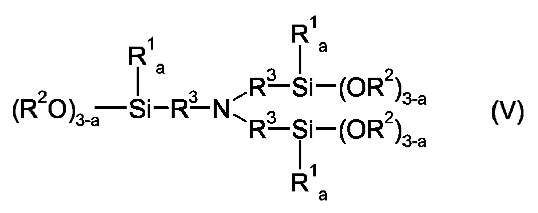

Die meist bevorzugten Aminosilane der Formel (I) sind die Aminosilane 3-Aminopropyl-trimethoxysilan, N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin und Tris(trimethoxysilylpropyl)amin.

In einer Ausführungsform ist das Aminosilan ein Reaktionsprodukt eines Aminosilans der Formel(I), wie es oben beschrieben worden ist, und welches mindestens eine sekundäre oder primäre Aminogruppe aufweist, mit einer Verbindung (**ARV**), welche mindestens eine funktionellen Gruppe, welche mit einer primären oder sekundären Aminogruppe reagieren kann.
Diese funktionelle Gruppe, welche mit einer primären oder sekundären Aminogruppe reagieren kann, ist bevorzugt eine Epoxygruppe. Es sind aber auch andere Gruppen, wie beispielsweise Isocyanat-Gruppen oder aktivierte Doppelbindungen, denkbar. Insbesondere geeignete Verbindungen mit Epoxygruppen sind Epoxysilane. Als bevorzugte Verbindungen (ARV), welche mit dem Aminosilan der Formel (I) mit mindestens einer sekundären oder primären Aminogruppe reagieren kann sind Epoxysilane der Formel (VI)

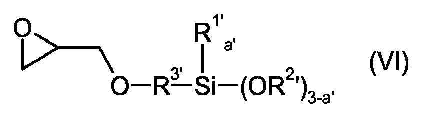

R^{1'} steht hierbei für eine Alkylgruppe mit 1 bis 8 C-Atomen, bevorzugt für eine Methyl- oder für eine Ethylgruppe. steht. R^{2'} steht für eine Alkylgruppe mit 1 bis 5 C-Atomen. Weiterhin steht R^{3'} für eine lineare oder verzweigte Alkylengruppe mit 1 bis 4 C-Atomen und a' für 0, 1 oder 2, insbesondere für 0 oder 1.
R^{1'} steht insbesondere für eine Methylgruppe. R^{2'} steht bevorzugt für eine Methylgruppe oder für eine Ethylgruppe oder für eine Isopropylgruppe. Als besonders bevorzugt steht R^{2'} für eine Methylgruppe oder für eine Ethylgruppe. R^{3'} steht bevorzugt für Propylen. Der Index a' steht bevorzugt für 0.
Als Epoxysilane sind beispielsweise 2-(3,4-Epoxycyclohexyl)-ethyl-trimethoxysilan, 2-(3,4-Epoxycyclohexyl)-ethyl-triethoxysilan, 3-Glycidyloxypropyl-triethoxysilan und 3-Glycidyloxypropyl-trimethoxysilan.
Als bevorzugte Epoxysilane gelten 3-Glycidyloxypropyl-triethoxysilan und 3-Glycidyloxypropyl-trimethoxysilan. Das meist bevorzugte Epoxysilane ist 3-Glycidyloxypropyl-trimethoxysilan.
Das Aminosilan der Formel(I), welches für das Reaktionsprodukt eingesetzt wird, sind neben N-(2-Aminoethyl)-3-aminopropyl-trimethoxysilan und N-(2-Aminoethyl)-3-aminopropyl-triethoxysilan, bevorzugt N-(2-Aminoethyl)-3-aminopropyl-trimethoxysilan, insbesondere Aminosilane der Formel (III) oder (IV), insbesondere 3-Aminopropyl-trimethoxysilan, Bis(trimethoxysilylpropyl)-amin, 3-Aminopropyl-triethoxysilan und Bis(triethoxysilylpropyl)amin. Bevorzugt sind 3-Aminopropyl-trimethoxysilan und Bis(trimethoxysilylpropyl)amin.

Je nach Stöchiometrie des Aminosilans der Formel (I) und der aminreaktiven Verbindung (**ARV**) kann das Reaktionsprodukt noch primäre oder sekundäre Aminogruppen aufweisen oder nicht.
Beispiele für derartige Rektionsprodukte sind Verbindungen der Formel (VII), (VIII), (IX), (X), (XI) und (XII).

Die Verbindungen der Formeln (VII), (VIII) und (IX) werden aus der Reaktion von N-(2-Aminoethyl)-3-aminopropyl-trimethoxysilan und 3-Glycidyloxypropyl-trimethoxysilan erhalten.

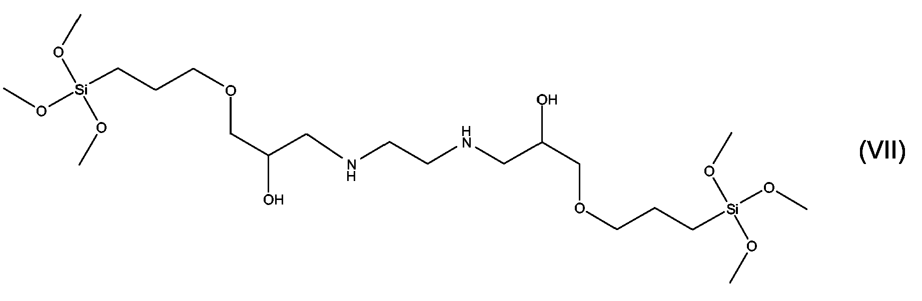

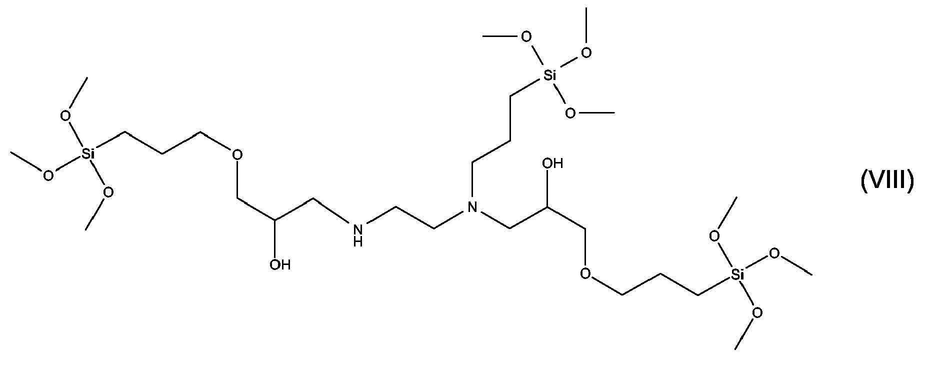

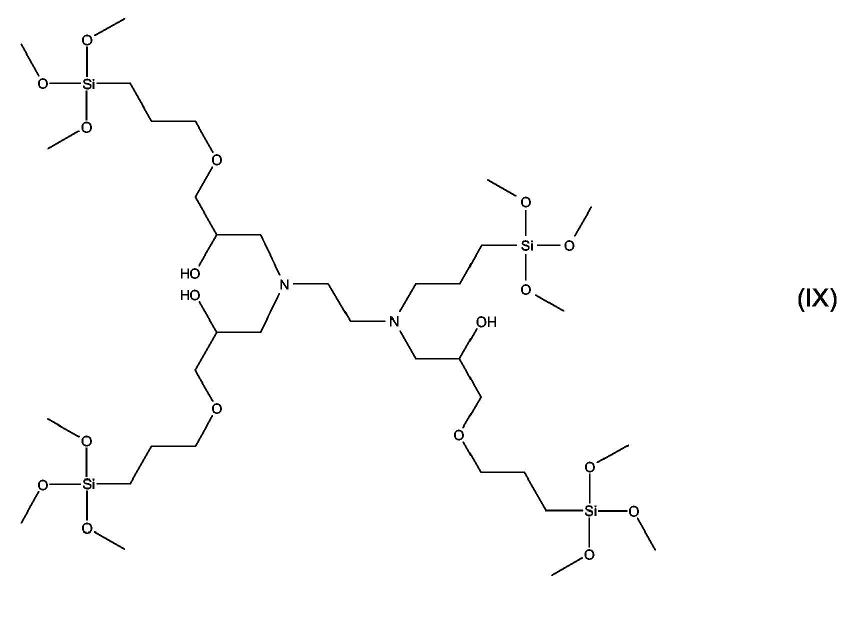

Die Verbindungen der Formeln (X) und (XI) werden aus der Reaktion von 3-Aminopropyl-trimethoxysilan und 3-Glycidyloxypropyl-trimethoxysilan erhalten.

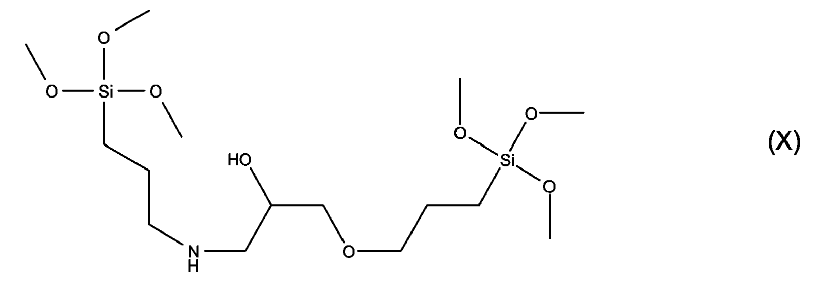

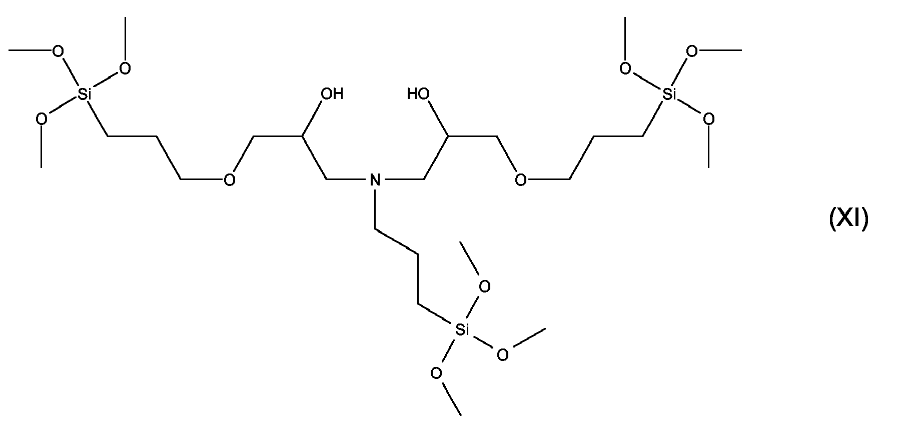

Die Verbindung der Formeln (XII) wird aus der Reaktion von Bis(trimethoxysilylpropyl)amin und 3-Glycidyloxypropyl-trimethoxysilan erhalten.

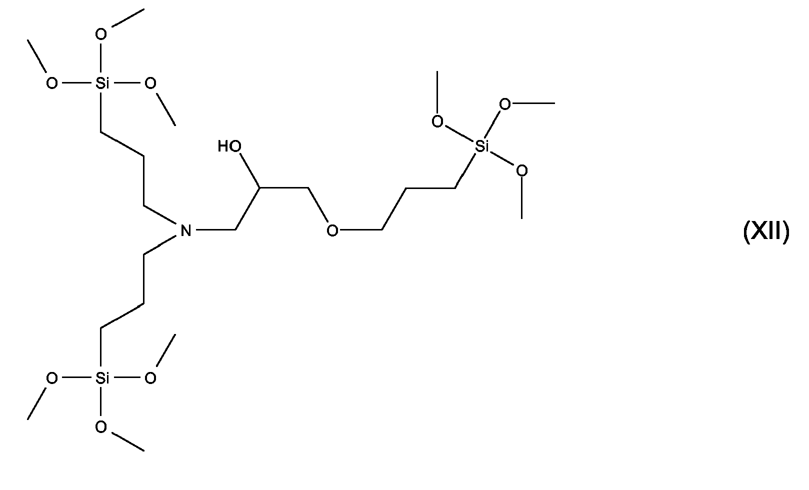

Beispiele für aminreaktiven Verbindungen (**ARV**) mit aktivierten Doppelbindungen sind beispielsweise α,β-ungesättigte Verbindungen, insbesondere Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd. Derartige aminreaktive Verbindungen bilden Michael-Addukte, bei denen das Amin an die Doppelbindung addiert. Beispiele derartiger Reaktionsprodukte sind Michael-Addukte von 3-Aminopropyl-trimethoxysilan, 3-Aminopropyl-dimethoxymethylsilan, 4-Amino-3,3-dimethylbutyl-trimethoxysilan, 4-Amino-3,3-dimethylbutyl-dimethoxymethylsilan, Aminomethyl-trimethoxysilan oder Aminomethyl-dimethoxymethylsilan an Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder -dibutylester, Acrylnitril, 2-Pentennitril, Fumaronitril oder β-Nitrostyrol, sowie die Analoga der genannten Aminosilane mit Ethoxy- anstelle der Methoxygruppen am Silicium. Insbeondere ist das Michael-Addukt N-(3-Trimethoxysilyl-propyl)-amino-bernsteinsäurediethylester zu nennen.

Beispiele für aminreaktiven Verbindungen (**ARV**) mit Isocyantgruppen sind Isocyanatosilane oder Polyisocyanate. Als Isocyanatosilan sind insbesondere 3-Isocyanatopropyl-trimethoxysilan und 3-Isocyanatopropyltriethoxysilan zu nennen. Als Polyisocyanate sind beispielsweise 2,4- und 2,6-Toluylendüsocyanat (TDI) und beliebige Gemische dieser Isomeren, 4,4'-, 2,4'-und 2,2'-Diphenylmethandüsocyanat (MDI) und beliebige Gemische dieser und weiterer Isomeren, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und-1,4-diisocyanat und beliebige Gemische dieser Isomeren, 1-Isocyanato-3,3,5-trimethyl-5-isocyanatomethyl-cyclohexan (=Isophorondüsocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3-und 1,4-Tetramethylxylylendiisocyanat (TMXDI), 1,3- und 1,4-Bis-(isocyanatomethyl)-cyclohexan, Oligomere der vorgenannten Polyisocyanate, sowie beliebige Mischungen der vorgenannten Polyisocyanate. Bevorzugt sind MDI, TDI, HDI und IPDI, sowie deren Biurete oder Isocyanurate.

Falls das Organoalkoxysilan **S** ein Epoxysilan ist, sind die Epoxysilane, wie sie oben als Aminreaktive Verbindungen (**ARV**) beschrieben worden sind vorzuziehen.

Beispielhaft als Mercaptosilan als Organoalkoxysilan **S** sind 3-Mercaptopropyl-trimethoxysilan und 3-Mercaptopropyl-triethoxysilan zu nennen.

Beispielhaft als (Meth)acrylatosilan als Organoalkoxysilan **S** sind 3-Methacryloxypropyltrimethoxysilan und 3-Methacryloxypropyltriethoxysilan zu nennen.

Falls das Organoalkoxysilan **S** ein Alkylsilan ist, sind insbesondere die Silane mit C₁-C₆-Alkylresten zu nennen, wie beispielsweise Methyltrimethoxysilan, Ethyltrimethoxysilan und Butyltrimethoxysilan.

Als Tenside **T** können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.
Beispiele für anionische Tenside sind Carboxylat-, Sulfat-, Phosphat- oder Sulfonat-Gruppen aufweisende Tenside, wie zum Beispiel Aminsäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören beispielsweise Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenylpolyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alklygruppen abgeschlossen sein können.
Beispiele für kationische Tenside sind quaternäre Ammonium- oder Phosphoniumverbindungen, wie zum Beispiel Tetraalkylammoniumsalze, N-,N-dialkylimidazolinverbindungen, Dimethyldistearyl-ammoniumverbindungen, oder N-Alkylpyridinverbindungen, insbesondere Ammoniumchloride.
Zu den ampholytischen oder amphoterischen Tensiden gehören amphotere Elektrolyte, sogenannte Ampholyte, wie zum Beispiel Aminocarbonsäuren, und Betaine.
Derartige Tenside sind kommerziell breit erhältlich.
Besonders geeignet sind nichtionische Tenside, insbesondere alkoxylierte Alkohole. Insbesondere geeignet gezeigt haben sich alkoxylierte nichtionische Fluorotenside, insbesondere Zonyl® FSO-100, welches bei ABCR, Deutschland kommerziell erhältlich ist, alkoxylierte Alkohole oder alkoxylierte Alkylphenole, insbesondere Antarox FM 33, welches kommerziell bei Rhodia erhältlich ist.

Um eine gute Lagerstabilität der Komponente **K1** zu gewährleisten ,muss das Tensid wasserfrei sein, da die Einbringung von wesentlichen Mengen an Wasser durch das Tensid zu vorzeitiger Hyrolyse der Silane und damit zu Lagerproblemen führen kann. Zum Verständnis des Terms "wasserfrei" wird auf die obige Definition verwiesen.
Um eine möglichst hohe Lagerstabilität der Komponente **K1** zu gewährleisten, ist es von Vorteil, wenn das Verhältnis von Organoalkoxysilan **S** zu Tensid **T** in einem bestimmten Verhältnis einzuhalten ist. Ist das Verhältnis **S:T** grösser als 5:1 wird die Empfindlichkeit gegenüber Wasser nicht wesentlich verbessert. Ist dieses Verhältnis kleiner als 1:2, insbesondere kleiner als 2:3, wird die Haftung der wässrigen Haftvermittlerzusammensetzung zunehmend negativ beeinflusst.
Um eine gute und schnelle Vermischung der Komponenten **K1** und **K2** zu erreichen, können auch höhere Verhältnisse von **S:T** als 5: 1 verwendet werden, in den Fällen, in welchen die Steigerung der Lagerstabilität der Komponente **K1** nicht benötigt oder gewollt ist. Es sind dann Verhältnisse Organoalkoxysilan **S** zu Tensid **T (S:T)** zwischen 20:1 bis 1:2 möglich.
Bevorzugt ist das Verhältnis von Organoalkoxysilan **S** zu Tensid **T** (**S:T**) zwischen 5:1 und 1:2.

Das optimale Verhältnis von Organoalkoxysilan **S** zu Tensid **T** beträgt, insbesondere für Aminosilane als Organoalkoxysilan **S,** einen Wert von 3:1 bis 2:3.
Es ist bevorzugt, dass die Komponente **K1** nicht weniger als 33 Gew.-%, insbesondere nicht weniger als 40 Gew.-% an Organoalkoxysilan **S** aufweist.

Die Komponente **K1** kann weitere Bestandteile enthalten. Beispiele für derartige Zusätze sind Lösungsmittel, anorganische Füllstoffe, Katalysatoren und Stabilisatoren, Farbstoffe oder Pigmente.
Falls derartige weitere Bestandteile verwendet werden, ist es vorzuziehen, dass die Komponente **K1** nicht mehr als 1 Gew.-%, insbesondere nicht mehr als 0.5 Gew.-% Wasser aufweist.
Bevorzugt sind die Komponenten **K1,** welche im Wesentlichen lediglich aus Organoalkoxysilan **S** und Tensid **T** bestehen. Unter "wesentlich" wird hierbei verstanden, dass die Gewichtssumme von Organoalkoxysilan **S** und Tensid **T** mehr als 90 Gew.-%, insbesondere mehr als 95%, bevorzugt mehr als 99 Gew.-%, bezogen auf das Gewicht der Komponente **K1,** beträgt.

Da vor allem polare, insbesondere wasserlösliche, Organoalkoxysilane empfindlicher in der Lagerstabilität gegenüber Wasser sind, treten die durch die vorliegende Erfindung erreichbaren Verbesserungen vor allen bei polaren insbesondere wasserlöslichen, Organoalkoxysilanen **S** zu Tage. Dies ist der Grund, warum sehr apolare Organoalkoxysilane **S**, wie beispielsweise höhere Alkylalkoxysilane, wie Dodecyltrimethoxysilan oder Octadecyltrimethoxysilan, nicht als Organoalkoxysilane **S** bevorzugt werden. Die Verbesserung der Lagerstabilität gegenüber Wasser ist besonders deutlich bei Aminosilanen als Organoalkoxysilane **S**.

Die Komponenten **K1,** insbesondere wenn sie Aminosilane als Organoalkoxysilane **S** enthalten, sind bedeutend weniger empfindlich gegenüber dem Einfluss von Wasser während der Lagerzeit. Dies zeigt sich insbesondere dann, wenn Wasser, insbesondere in der Form von Luftfeuchtigkeit, in Kontakt mit der Komponente K1 gelangen kann. Gründe für einen derartigen Kontakt können beispielsweise undichte Verpackungen sein. So kann es in der Praxis durchaus vorkommen, dass beispielsweise Orginalverpackungen nicht dicht sind, oder dass ein Vorrats-Gebinde nach dem erstmaligen Öffnen schlecht oder undicht wieder verschlossen wird oder dass es eine gewisse Zeit völlig unverschlossen der Umwelt exponiert ist. Schliesslich lassen sich die Lagerstabilität der Komponenten **K1** stark erhöhen, wenn diese in Gefässen aus Kunststoff gelagert werden. Die für Kunststoffgebinde üblich verwendeten Kunststoffe, wie Polyethylen oder Polypropylen, weisen nämlich vielfach eine ungenügende Wasserdampfdiffusionsdichtigkeit auf. Silanzusammensetzungen gemäss dem Stand der Technik sind deshalb nicht in Kunststoffgebinden sondern in Gebinden aus Glas, Metallen oder Verbundwerkstoffen gelagert. Durch die Möglichkeit der Verwendung von Kunststoffgebinden für die Lagerung der hier vorgestellten Komponenten **K1** ergeben sich deshalb enorme Kosten- und Gewichtsvorteile sowie zusätzliche Freiheiten im Design und Gestaltung der Verpackung, respektive Packung.
Die verbesserte Lagerfähigkeit, beziehungsweise geringere Empfindlichkeit gegenüber Wasser während der Lagerzeit, zeigt sich insbesondere durch das Ausbleiben oder zumindest starkes Verzögern der Bildung von Ausfällungen oder Trübungen oder Gel-Bildung ohne negative Beeinträchtigung der haftvermittelnden Eigenschaften.

Die Komponente **K2** enthält neben Wasser mindestens eine Säure. Die Säure kann organisch oder anorganisch sein. Organische Säuren sind einerseits Carbonsäuren, insbesondere eine Carbonsäure, welche ausgewählt ist aus der Gruppe umfassend Ameisen-, Essig-, Propion-, Trifluoressig-, Oxal-, Malon-, Bernstein-, Malein-, Fumar- und Zitronensäure sowie Aminosäuren, insbesondere Asparginsäure und Glutaminsäure. Bevorzugt sind Säuren die einen pKₐ zwischen 4.0 und 5 aufweisen. Derartige Säuren verfügen wegen ihrem pKₐ über eine ausgezeichnete Pufferwirkung in dem für die vorliegende Erfindung optimalen pH-Bereich von 3.5 bis 4.5, welcher beim Mischen von Komponenten **K1** und **K2** resultiert. Unter "pKₐ" versteht der Chemiker bekannterweise den negativen dekadischen Logarithmus der Säuredissoziationskonstante Kₐ: pKₐ = -log₁₀kₐ.
Als Carbonsäure ist Essigsäure bevorzugt.
Organische Säuren sind anderseits insbesondere solche die einen Schwefelatom oder ein Phosphoratom enthalten. Derartige organische Säuren sind insbesondere organische Sulfonsäuren. Unter organischer Sulfonsäure werden Verbindungen verstanden, welche einen Kohlenstoff-Atome aufweisenden organischen Rest sowie mindestens eine funktionelle Gruppe - SO₃H aufweisen.
Die aromatische Sulfonsäure kann ein- oder mehrkernig sein und es können eine oder mehrere Sulfonsäure-Gruppen vorhanden sein. Beispielswiese können dies 1- oder 2-Napthalinsulfonsäure, 1,5-Napthalindisulfonsäure, Benzolsulfonsäure oder Alkylbenzolsulfonsäuren sein.
Bevorzugte aromatische Säuren sind diejenigen, welche die Formel (XIII) aufweisen

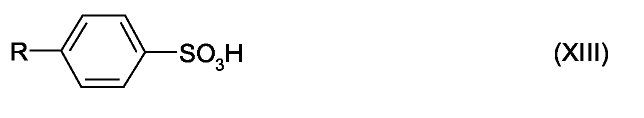

R steht hierbei für einen Alkylrest mit 1 bis 18 Atomen. Bevorzugt steht R für eine Methyl- oder Dodecyl-Gruppe, insbesondere für eine Dodecyl-Gruppe.
Die Säure kann weiterhin eine anorganische Säure sein. als anorganische Säuren haben sich insbesondere solche als geeignet gezeigt, welche ein Schwefelatom oder ein Phosphoratom aufweisen.
Als Phosphoratome aufweisende Säuren gelten insbesondere Phosphorsäure, Phosporige Säure, Phosponsäure, Phosphonige Säure.
Als Schwefelatome aufweisende Säuren gelten insbesondere Schwefelsäuren, insbesondere Schwefelsäure, schweflige Säuren, Perschwefelsäure, Dischwefelsäure (=Pyroschwefelsäure), Dischwefelige Säure, Dithionsäure, Dithionige Säure, Thioschwefelsäure oder Thioschweflige Säure.
Es hat sich gezeigt, dass gute Haftung auf Lacken, insbesondere auf Automobildecklacken, erreicht werden können, wenn die Säure mindestens einem Schwefelatom und einen pKₐ von weniger als 2 aufweist.
Die Komponente **K2** kann weitere Bestandteile umfassen. Beispiele für derartige Zusätze sind Lösungsmittel, anorganische Füllstoffe, Katalysatoren und Stabilisatoren, Farbstoffe oder Pigmente.

Der Gewichtsanteil des Wassers beträgt vorzugsweise mindestens 60 Gew.-%, bezogen auf das Gewicht der Komponente **K2.**

Es ist bevorzugt, wenn die Komponente **K2** im Wesentlichen aus Wasser und Säure besteht, das heisst, dass die Menge an Wasser und Säure zusammen mehr als 90 Gew.-%, insbesondere mehr als 95 Gew.-%, bevorzugt mehr als 99 Gew.-%, bezogen auf das Gewicht der Komponente **K2,** beträgt.
Die Menge der Säure in der Komponente ist so bemessen, dass eine Mischung von der Komponenten **K1** und **K2** sauer ist, und dass deren pH vorzugsweise zwischen 3 und 5, insbesondere zwischen 3.5 bis 4.5, liegt.
Dies ist zu berücksichtigen, wenn in der Komponente **K1** basische Bestandteile, insbesondere wenn Komponente **K1** Aminosilane, enthält.

Die Komponenten **K1** und **K2** sind getrennt von einander sehr lange lagerfähig. Für die Anwendung der wässrigen Haftvermittlerzusammensetzungen werden die Komponenten **K1** und **K2** gemischt. Es ist ein wesentlicher Vorteil der vorliegenden Erfindung, dass dieses Mischen sehr leicht möglich ist.
Wenn die Komponente **K1** in Komponente **K2** gegeben wird, vermischen sich die zwei Komponenten spontan, beziehungsweise nach leichtem Rühren. Dies steht in krassem Kontrast zu den nichterfindungsgemässen Fällen, in welchen Organoalkoxysilane ohne Tenside zur Komponente **K1** zugegeben werden. Aufgrund des Dichteunterschiedes sinken dann die meisten Organoalkoxysilane auf den Boden, so dass ein zweiphasiges System entsteht und nur durch intensives hochtouriges Mischen, bzw. Dispergieren homogenisiert werden kann. In vielen Fällen entstehen zudem beim Zugeben oder an der Phasengrenze Ausfällungen oder Trübungen, welche zu einem inhomogenen Produkt führen und unerwünscht sind.
Weiterhin konnte beobachtet werden, dass aufgrund der Verwendung des Tensids als Bestandteil der Komponente **K1** weniger Säure verwendet werden muss, um eine gute Vermischbarkeit der Silankomponente mit der Wasserkomponente zu erreichen. Dadurch resultiert eine geringere Geruchsbelastung durch den Eigengeruch der Carbonsäure, im Vergleich zu der analogen Komponente ohne Tensid.

Durch das Mischen der Komponenten ist die Hydrolyse der Organoalkoxysilanen **S** ermöglicht. Die Applikation der gemischten Komponenten erfolgt vorzugsweise nicht unmittelbar nach dem Mischen. Es ist von Vorteil, wenn eine kurze Zeit, typischerweise eine Zeit zwischen einer und zehn Minuten, gewartet wird, bis die Mischung auf eine Substratoberfläche appliziert wird.
Es ist anzustreben, dass nach dem Mischen die Hydrolyse der Organoalkoxysilane **S** möglichst schnell erfolgt, aber dass die Kondensation zu Siloxanen möglichst stark verzögert wird.

Um eine schnelle Hydrolyse der Organoalkoxysilanen **S** zu erreichen, sind Methoxysilane (R² bzw. R^{2'}= -CH₃) gegenüber Ethoxysilanen (R² bzw. R^{2'} =-CH₂CH₃) vorgezogen.

Es gibt grundsätzlich die drei verschiedenen Arten eine Verklebung oder eine Abdichtung zu erreichen
In einem ersten Verfahren wird nach dem Mischen der Komponenten **K1** und **K2** einer zweikomponentigen Haftvermittlerzusammensetzung die so erhaltene Mischung auf ein zu verklebendes oder abzudichtendes Substrat **S1** appliziert. Anschliessend wird ein Klebstoff oder Dichtstoff auf die abgelüftete wässrige Haftvermittlerzusammensetzung, welche sich auf dem Substrat **S1** befindet, appliziert. Daraufhin wird Kontaktieren des Klebstoffs oder Dichtstoffes mit einem zweiten Substrat **S2** kontaktiert.
In einem zweiten Verfahren wird nach dem Mischen der Komponenten **K1** und **K2** einer zweikomponentigen Haftvermittlerzusammensetzung die so erhaltene Mischung auf ein zu verklebendes oder abzudichtendes Substrat **S1** appliziert. Anschliessend wird ein Klebstoff oder Dichtstoff der auf die Oberfläche eines zweiten Substrates **S2** appliziert. Daraufhin wird der Klebstoff oder Dichtstoff mit der abgelüfteten wässrigen Haftvermittlerzusammensetzung, welche sich auf dem Substrat **S1** befindet, kontaktiert.
In einem dritten Verfahren wird nach dem Mischen der Komponenten **K1** und **K2** einer zweikomponentigen Haftvermittlerzusammensetzung die so erhaltene Mischung auf ein zu verklebendes oder abzudichtendes Substrat **S1** appliziert. Nach dem Ablüften der zweikomponentigen Haftvermittlerzusammensetzung wird der Klebstoff oder Dichtstoff zwischen die Oberflächen des Substrates **S1** und **S2,** appliziert.

Das zweite Substrat **S2** kann in all diesen drei Verfahren aus demselben oder unterschiedlichem Material wie das Substrat **S1** bestehen.
Das Ablüften der auf die Substratoberfläche applizierten wässrige Haftvermittlerzusammensetzung ermöglicht es, einerseits dass ein Grossteil des an der Oberfläche des Substrates vorhandenen Wassers verdampfen kann und dass anderseits die Organoalkoxysilane, beziehungsweise deren Silanole, untereinander, beziehungsweise mit der Oberfläche vernetzen können. Typischerweise beträgt die Ablüftezeit etwa 10 bis 15 Minuten.
Der Auftrag der gemischten wässrigen Haftvermittlerzusammensetzung erfolgt durch Sprühen, Anstreichen, Rollen oder Eintauchen. Üblicherweise wird die gemischte wässrige Haftvermittlerzusammensetzung mit Pinsel, Tuch oder Filz appliziert.

Um einen verklebten oder abgedichteten Verbund zu erreichen, erfolgt bei all diesen drei Verfahren anschliessend an den letzten der genannten Schritte ein Schritt des Aushärtens des Kleb- oder Dichtstoffes.
Es können diverse Klebstoffe oder Dichtstoffe verwendet werden. Je nach Verwendung und Einsatzort des verklebten oder abgedichteten Körpers kann dies ein Klebstoff oder Dichtstoff auf Epoxidharzbasis, auf Isocyanatbasis, auf (Meth)acrylaten oder auf Basis von Silanterminierten Polymeren ("STP"s) oder Silikonen sein. Es kann sich hierbei beispielsweise um Raumtemperatur-härtende Kleb- oder Dichtstoffe, um Heissschmelzklebstoffe (so genannte "hotmelts"), um Dispersionskleb- oder Dichtstoffe oder Haftklebstoffe (sogenannte "pressure sensitive adhesives") handeln.
Der Kleb- oder Dichtstoff kann einkomponentig oder mehrkomponentig sein. Bevorzugt ist der Kleb- oder Dichtstoff einkomponentig.
Am meist bevorzugt ist der Klebstoff ein feuchtigkeitshärtender einkomponentiger Polyurethankleb- oder Dichtstoff, insbesondere ein feuchtigkeitshärtender einkomponentiger Polyurethanklebstoff, wie sie beispielsweise als Sikaflex® bei Sika Schweiz AG kommerziell erhältlich sind.

Die so erhaltenen verklebten oder abgedichteten Artikel sind von vielfältiger Natur. Insbesondere sind diese aus dem Gebiet der industriellen Fertigung, bevorzugt sind sie Transportmittel, insbesondere Automobile. Sie können auch Anbauteile sein. Derartige Anbauteile sind insbesondere vorgefertigte Modulteile welche an der Fertigungslinie als Module verwendet werden und insbesondere an- oder eingeklebt werden. Bevorzugt werden diese vorgefertigten Anbauteile im Transportmittelbau eingesetzt.

Als Beispiele eines derartigen Anbauteils ist die Führerkabine von Lastkraftwagen oder von Lokomotiven oder Schiebedächern für Autos.
Es sind aber auch Anwendungen im Bau von Möbeln, weissen Waren, wie Waschmaschine, Gebäudeteilen wie Fassaden oder Fahrstühle, möglich.

Die Komponenten **K1** und **K2** können in zwei räumlich voneinander getrennten Behältern gelagert werden oder sind Bestandteil einer Packung sein.
Eine derartige Packung 6 besteht aus einer Verpackung 5, welche zwei durch mindestens eine Trennwand 3 voneinander getrennten Kammern 1, 2 aufweist, und einer wässrigen zweikomponentigen Haftvermittlerzusammensetzung, wie sie vorgängig beschrieben wurde, wobei die erste Komponente **K1** in der ersten Kammer und die zweite Komponente **K2** in der zweiten Kammer 2 vorhanden ist.

Die möglichen und bevorzugten Ausgestaltungen der Kammern sowie der Trennwände wird im Folgenden schematisch beschrieben.

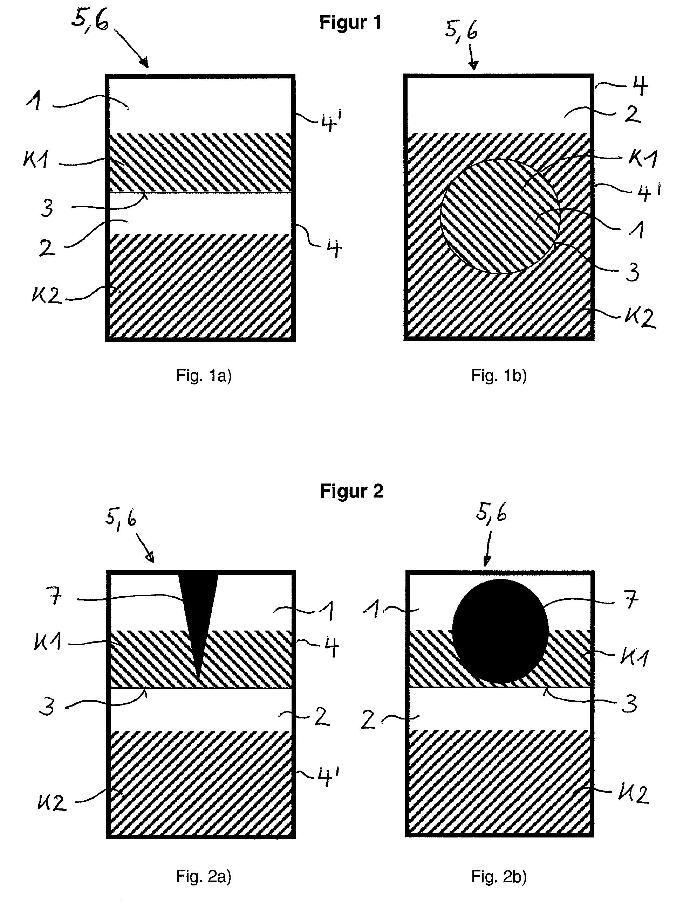

Figur 1 zeigt eine Ausführungsform **P1** einer Packung 6, respektive einer verwendeten Verpackung 5. In dieser Ausführungsform ist die Trennwand 3 aus einem zerbrechlichen Material gefertigt. In Figur 1a ist eine Variante gezeigt, in welcher die erste Kammer 1 nicht vollständig von der zweiten Kammer 2 umgeben ist, während in Figur 1 b eine Variante beschrieben ist, in welcher die erste Kammer 1 vollständig von der zweiten Kammer 2 umgeben ist. Die Trennwand 3 zwischen den zwei Kammern bricht bei Aufbringung von Druck, wodurch die zwei Komponenten **K1, K2** miteinander in Kontakt geraten, mischen und/oder reagieren können. Der Druck wird typischerweise von aussen durch Krafteinwirkung auf die Aussenwand 4, 4' der Kammern erzeugt. Diese Krafteinwirkung ist bevorzugt eine Schlageinwirkung oder Verbiegen der Verpackung. Das Material der Trennwand 3 ist typischerweise aus Glas, Aluminium, einer Aluminiumlegierung, aus einem dünnen Kunststoff oder einem Verbundmaterial gefertigt. Die Trennwand 3 muss in einer Dicke gefertigt sein, dass sie nicht bereits durch eine unbeabsichtigte Krafteinwirkung, wie sie beispielsweise üblicherweise bei Transporten vorkommen, bricht. Die Aussenwand 4,4' muss derart gestaltet sein, dass sie bei der Aufbringung des Druckes, der zum Brechen der Trennwand 3 führt, nicht bricht oder einreisst. Die Aussenwand 4,4' ist entweder aus einem Metall oder einem elastischen Kunststoff gefertigt.

Figur 2 zeigt eine Ausführungsform **P2** einer Packung 6, respektive einer verwendeten Verpackung 5 mit Berstmitteln, insbesondere Schneidmittel 7. Bei dieser Ausführungsform wird der Druck durch ein Schneidmittel 7 auf die Trennwand 3 gebracht. Das Schneidmittel 7 ist entweder beweglich und wird auf die feststehende Trennwand 3 gedrückt, oder aber das Schneidmittel 7 ist fixiert und die Trennwand 3 wird auf das Schneidmittel 7 gedrückt. Durch den Druck reisst diese ein, so dass die zwei Komponenten **K1, K2** miteinander in Kontakt geraten und/oder reagieren können. Das Schneidmittel 7 ist vorzugsweise im Lagerzustand der Packung in einem gewissen Abstand von der Trennwand 3 entfernt. Schneidmittel 7 und Trennwand 3 können aufeinander verschoben werden. Dies erfolgt entweder durch eine Aufbringung von Druck und damit durch eine Verformung der Aussenwand 4,4' oder mit Hilfe eines Gewindes. Die Aussenwand 4,4' muss derart gestaltet sein, dass sie bei der Aufbringung des Druckes, der zum Durchbrechen der Trennwand 3 mittels Schneidmittels 7 führt, nicht selber bricht oder einreist. Die Aussenwand 4,4' ist entweder aus einer Metallfolie oder einem elastischen Kunststoff gefertigt. Die Art des Schneidmittels kann grundsätzlich sehr unterschiedlich gestaltet sein. So zeigt Fig. 2a) eine scharfe Spitze als Schneidmittel 7, während Fig. 2b eine Kugel als Bersthilfsmittel, insbesondere Schneidmittel, 7 zeigt. Bevorzugt weist das Schneidmittel 8 entweder Spitzen oder Kanten auf. Solche Spitzen oder Kanten erleichtern das Durchtrennen der Trennwand 3. Deshalb ist eine Ausführungsform gemäss Figur 2a bevorzugt.

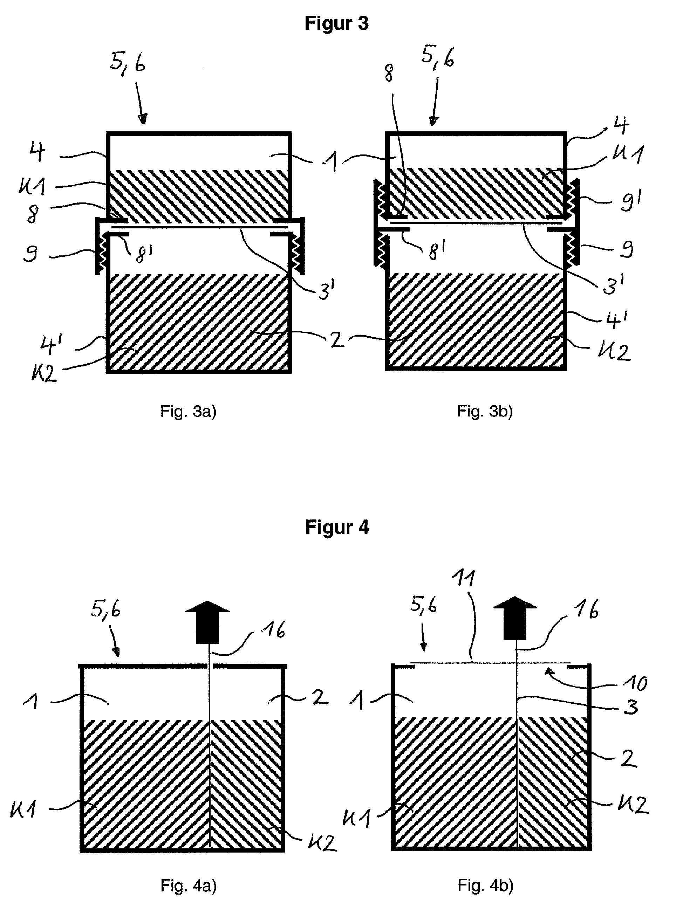

Figur 3 zeigt eine Ausführungsform **P3** einer Packung 6, respektive einer verwendeten Verpackung 5. In dieser Ausführungsform ist die Trennwand durch eine Dichtung 3' realisiert. Die Dichtung 3' trennt im ungeöffneten Zustand der Verpackung 5 die zwei Kammern 1,2 voneinander ab. Dies wird dadurch erreicht, dass im ungeöffneten Zustand die Dichtung 3' durch mindestens zwei Wandungen 8,8' der Aussenwand 4,4' gequetscht wird. Mindestens eine der Wandungen 8,8' ist durch äusseren Einfluss bewegbar ausgestaltet. Eine solche Bewegbarkeit wird insbesondere über ein Gewinde 9, 9' erreicht. Beim gewollten Öffnen wird die Wandung 8, 8' von der gequetschten Dichtung 3' entfernt, wodurch diese die Abdichtfunktion verliert und einen Durchgang öffnet, so dass die zwei Komponenten **K1, K2** miteinander in Kontakt geraten und/oder reagieren können. In einem besonderen Variante dieser Ausführungsform wird beim Öffnen oder beim einem Schütteln der Packung die Dichtung 3' so locker, dass sie in die eine Kammer fällt.
Die Dichtung 3' ist aus einem elastischen Material gefertigt, wie sie üblicherweise für das Abdichten von Flüssigkeiten verwendet werden.
Figur 3 a) zeigt eine Ausführung mit einem Gewinde 9, während Figur 3 b) zwei Gewinde 9, 9' aufweist. Figur 3 b) ist gegenüber 3a) vorteilhaft, weil in einem ersten Schritt die erste Kammer mit einer Komponente **K1** oder **K2** befüllt werden kann, anschliessend die Dichtung 3' über ein Gewinde 9 aufgeschraubt werden kann und damit über die Wandung 8 dicht verschlossen werden kann und erst zu einem späteren Zeitpunkt dieses Teil, das die Funktion eines Deckels aufweist, auf den zweiten Teil der Packung, welche die andere Komponente **K2** oder **K1** mit dem zweiten Gewinde 9' aufgeschraubt werden kann und somit auch die zweite Kammer über die Wandung 8' dicht abschliessen kann.

Figur 4 zeigt eine Ausführungsform **P4** einer Packung 6, respektive einer verwendeten Verpackung 5. In dieser Ausführungsform ist die Trennwand 3 herausreissbar gestaltet. Hierbei ist zwischen den Kammern eine dünne Trennwand 3 vorhanden, die durch einen äusseren Eingriff herausgerissen wird, so dass die zwei Komponenten **K1, K2** miteinander in Kontakt geraten und/oder reagieren können. Die Verbindungsstellen im Bereich, wo die Trennwand mit der Innenwand der Kammern 1,2 verbunden sind, weisen hierzu Sollbruchstellen auf. Für das Herausreissen eignen sich insbesondere Ausführungsformen, bei denen die Trennwand 3 mit einer Reisslasche 16 verbunden ist. Figur 4a) zeigt eine Variante, bei welcher lediglich die Trennwand 3 mit den Innenwänden der Kammern 1,2 verbunden ist. Die Verbindungsstellen im Bereich, wo die Trennwand mit der Innenwand der Kammern 1,2 verbunden sind, weisen hierzu -ebenso wie der Bereich, wo die Reisslasche 16 mit der Aussenwand verbunden ist- eine Sollbruchstelle auf. In Figur 4b) wird beim Herausreissen der Trennwand gleichzeitig auch die mit der Reisslasche 16 und der Trennwand verbundene Abdeckung 11 von der Packung abgetrennt, so dass eine Öffnung 10 entsteht, durch welche die miteinander in Kontakt geratenen zwei Komponenten der Verpackung entnommen werden können.

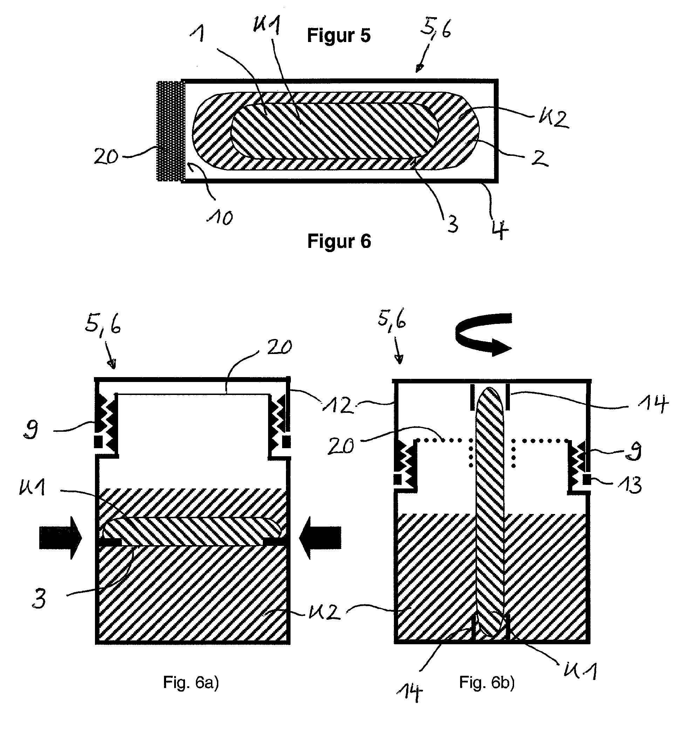

Figur 5 zeigt eine bevorzugte Ausführungsform der Ausführungsform **P1.** In dieser Ausführungsform besteht die erste Kammer 1 mit der einen Komponente **K1** aus einer zerbrechlichen Glas- oder Kunststoffampulle 3. Die zweite Kammer 2 mit der anderen Komponente **K2** ist ebenfalls eine zerbrechlichen Glas- oder Kunststoffampulle. Die zwei Ampullen sind vorzugsweise in einer Rohr-in-Rohr-Anordnung oder -wie dargestellt- in einer Ampulle-in-Ampulle-anordnung angeordnet. Diese Ampullenanordnung ist in einem Behälter, dessen Aussenwänden 4 aus biegsamen Kunststoff oder Karton gefertigt ist, eingelassen. Weiterhin weist dieser Kunststoffbehälter eine Öffnung 10 auf, die durch eine poröse Abdeckung 20, insbesondere durch einen Filzstreifen oder einen Schwamm abgedeckt ist. Beim Aktivieren der Packung werden durch ein Verbiegen der Aussenwände 4 oder einen Schlag auf die Aussenwände des Behälters aus Kunststoff oder Karton die Glasampullen aufgebrochen, so dass sich die Komponenten **K1, K2** mischen und/oder reagieren können. Die Reaktionsmischung tränkt den Filz oder Schwamm 20 und kann mittels dessen Kontakt mit einer Oberfläche appliziert werden. Der Filz oder Schwamm hilft weiterhin allfällige Splitter, welche von der zerbrochenen Ampulle herrühren können, vor dem Austreten aus der Packung 5, 6 zu verhindern. Diese Ausführungsform **P1** stellt somit eine Einwegpackung für die Applikation einer zweikomponentigen wässrigen Haftvermittlerzusammensetzung dar. Sie ist speziell für kleine Mengen gut geeignet. Insbesondere eignet sich diese Packung für die Vorbehandlung einer Fahrzeugscheibe, insbesondere einer Autoscheibe.

Figur 6 zeigt eine weitere bevorzugte Ausführungsform der Ausführungsform **P1.** Hierbei ist eine zerbrechliche Glas- oder Kunststoffampulle 3, welche die eine Komponente **K1** enthält, in einer Flasche mit einem Fixierungsmittel 14 festgehalten, welche die andere Komponente **K2** enthält. Figur 6a) zeigt eine Ausführungsform mit einer liegenden Ampulle 3. Die Ampulle kann hierbei gegebenenfalls durch ein starres Mittel, beispielsweise einen Metallspatel, zerbrochen werden, so dass sich die Komponenten **K1, K2** mischen und/oder reagieren können, oder die Ampulle kann durch ein Zusammendrücken oder Schlagen der Flasche zum Bersten gebracht werden. Das starre Mittel kann durch eine Öffnung der Flasche eingeführt werden. Nach dem Entfernen des Mittels kann die Flasche gegebenenfalls verschlossen und geschüttelt werden. Figur 6b) zeigt eine Ausführungsform mit einer stehenden Ampulle 3. Die Ampulle ist derart gestaltet, dass sie länger als die Flaschenhöhe ist und in den Deckel 12 in ein Fixierungsmittel 14 hineinragt. Der Deckel 12 trägt ein Gewinde 9 und ist vorzugsweise mit einer Sicherheitslasche 13 versehen, die ein versehentliches Drehen des Deckels 12 verhindert. Bei der gewollten Aktivierung wird die Sicherheitslasche 13 entfernt und der Deckel 12 gedreht, wodurch sich die Basis des Deckels 12 auf die Ampulle 3 hinzubewegt und sie unter Druck zum Zerbrechen oder Einreissen bringt, so dass sich die Komponenten **K1, K2** mischen und/oder reagieren können. Durch den Deckelverschluss ist weiterhin gewährleistet, dass die Flasche dicht ist und geschüttelt werden kann. In beiden Ausführungsformen gemäss Figur 6a und 6b ist es zu bevorzugen, dass nach dem Mischen der Komponenten **K1, K2** für das Auftragen des Reaktionsgemisches ein Filz oder ein feines Netz 20 angebracht wird, um allfällige Splitter, welche von der zerbrochenen Ampulle herrühren können, an dem Austreten aus der Packung zu hindern. Es ist bevorzugt, dass ein Filz oder ein Schwamm verwendet wird, weil dieser von der zweikomponentigen wässrigen Haftvermittlerzusammensetzung durchtränkt wird und deshalb sehr gut zu dessen Applikation geeignet ist. Der Filz oder Schwamm ist typischerweise mit einem Formteil verbunden, welcher ein Gewinde aufweist und auf das Gewinde 9 der Flasche geschraubt werden kann.

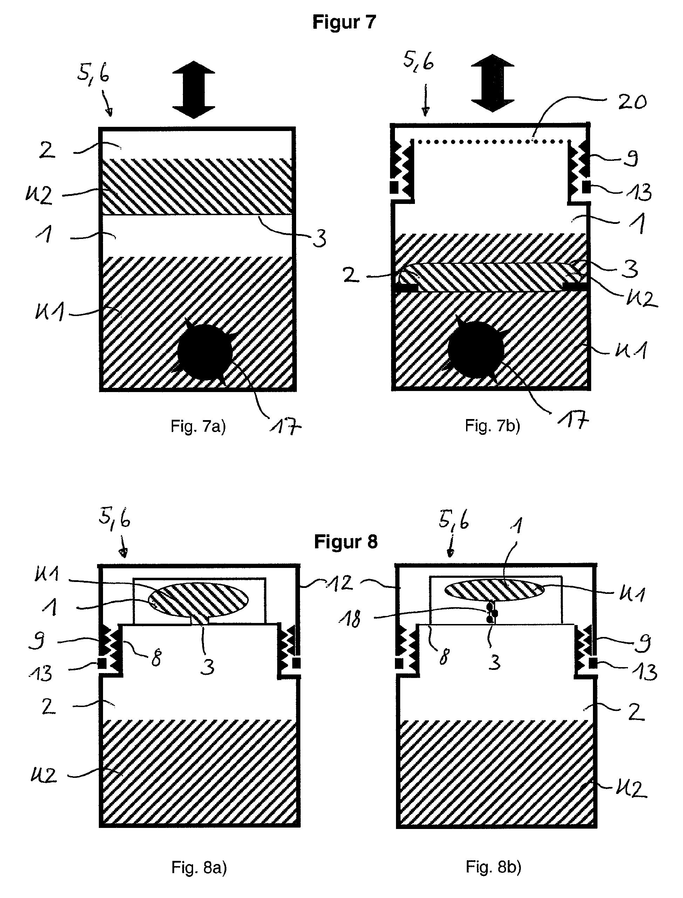

Figur 7 zeigt eine weitere bevorzugte Ausführungsform der Ausführungsform **P1.** Hierbei ist in einer Kammer 1 mindestens eine Metallkugel als Mischungshilfsmittel 17 vorhanden. Durch Schütteln wird die zwischen den zwei Kammern vorhandene Trennwand 3 durch die Kugel 17 zerbrochen oder eingerissen, so dass sich die Komponenten **K1, K2** mischen und/oder reagieren können. Die Kugel 17 kann bei Bedarf mit Spitzen oder Kanten versehen sein, um ein Einreissen der Trennwand 3 zu erleichtern. Die Dicke und Art der Trennwand 3 sowie die Menge und Oberflächengestalt der verwendeten Kugeln 17 ist derart zu wählen, dass die Zerstörung der Trennwand 3 durch einfaches Schütteln der Packung 6 möglich ist, aber nicht ungewollt, wie bereits bei kleinen Erschütterungen, wie sie bei Transporten vorkommen. Neben der in Figur 7a) gezeigten Variante mit Trennwand 3, die sich zwischen den Aussenwänden 4,4' zwischen den Kammern spannt, wird in Figur 7b) eine Abwandlung der in Figur 6 gezeigte Ampulle 3, welche die eine Komponente enthält, dargestellt.

Figur 8 zeigt eine weitere bevorzugte Ausführungsform der Ausführungsform **P1.** In dieser Ausführungsform ist die eine Komponente **K1** in einer Kammer 1 abgepackt, welche eine Blase 21 bildet. In Figur 8a ist die Blase 21 derart ausgestaltet, dass an deren Basis sie mit der Trennwand 3 verbunden ist und dort eine Sollbruchstelle aufweist. Durch Entfernen der Sicherheitslasche 13 kann der Deckel 12 über das Gewinde 9 zugedreht werden, wodurch sich die Basis des Deckels 12 auf die Blase hin bewegt. Dadurch wird die Blase 21 gequetscht bis ein genügend grosser Druck entsteht, dass die Sollbruchstelle bricht, so dass sich die Komponenten **K1, K2** mischen und/oder reagieren können. Diese Ausführungsform ist geeignet insbesondere für dünnflüssige Komponenten **K1, K2.** Es kann aber auch nach dem Entfernen der Sicherheitslasche 13 der Deckel 12 abgeschraubt werden und die Blase 1,2 von Hand manuell gequetscht und die darin enthaltene Komponente ausgepresst werden. In Figur 8b) weist die Blase 21 einen Klemmverschluss 18 auf. Durch das Verquetschen der Wand des Durchgangs zwischen den Kammern 1 und 2 bildet diese die Trennwand 3, welche die zwei Kammern 1,2 in ungeöffnetem Zustand voneinander abtrennt. Beim Öffnen wird zuerst der Deckel 12 mittels Gewinde 9 abgeschraubt. Anschliessend wird der Klemmverschluss 18 entfernt, wodurch der Durchgang zwischen den Kammern 1 und 2 geöffnet wird, so dass sich die Komponenten **K1, K2** mischen und/oder reagieren können. Dies kann durch eine Auspressen der Blase 21 noch unterstützt werden. In beiden Ausführungsformen wird vorzugsweise die Blase mit der Wandung 8 der anderen Kammer 2 derart verbunden ausgestaltet, dass sie leicht entfernt werden kann, um anschliessend zur Applikation der Haftvermittlerzusammensetzung einen Filz oder einen Schwamm, insbesondere mit Hilfe des Gewindes 9 an der Öffnung 10 zu befestigen zu können.

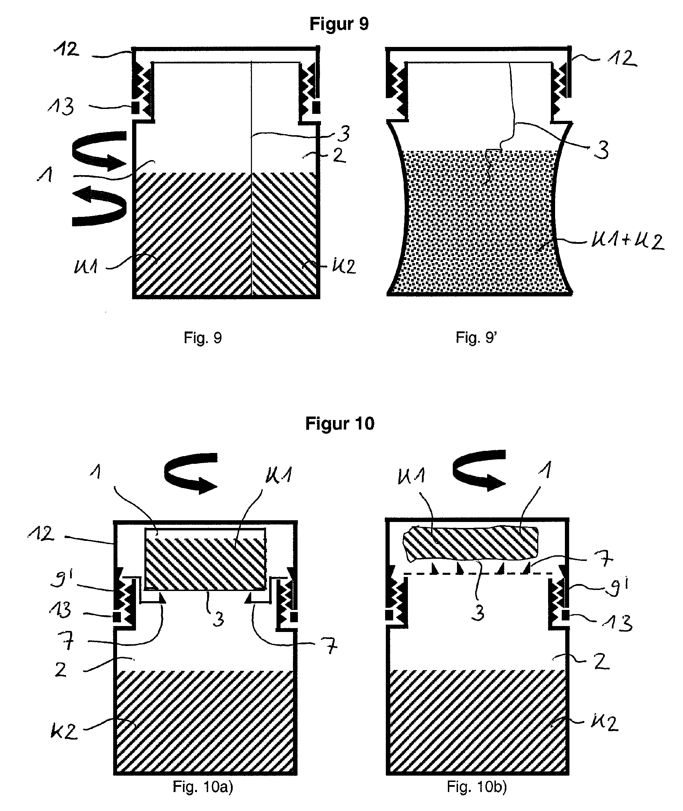

Figur 9 zeigt eine weitere bevorzugte Ausführungsform der Ausführungsform **P1.** Hierbei handelt es sich um eine Flasche 5 oder einen Doppelschlauchbeutel 5, welche zwei Kammern 1,2 aufweist, welche durch eine in Längsrichtung der Flasche oder Beutels angeordnete Trennwand 3 von einander abgetrennt sind. Die Aussenwände 4,4' der Flasche 5 oder Beutels 5 sind aus einem sehr elastischen Material gefertigt, während die Trennwand 3 entweder aus einem starren Material oder in einer sehr dünnen Schichtstärke gefertigt ist. Durch axiales Verdrehen der Flasche 5 oder des Doppel-Beutels 5 wird die Trennwand sehr stark gedehnt oder belastet, so dass die Trennwand 3 einreisst -dargestellt in Figur 9'-, so dass sich die Komponenten **K1, K2** mischen und/oder reagieren können. Bevorzugt weist der Beutel oder die Flasche an deren Ende ein Gewinde 9 mit einem dicht schliessenden Deckel 12 auf. Dieser Deckel 12 kann nach dem Mischen oder Schütteln geöffnet werden und das Reaktionsgemisch auf eine Oberfläche appliziert werden. Weiterhin bevorzugt kann auf dieses Gewinde 9 ein Filz aufgeschraubt werden.

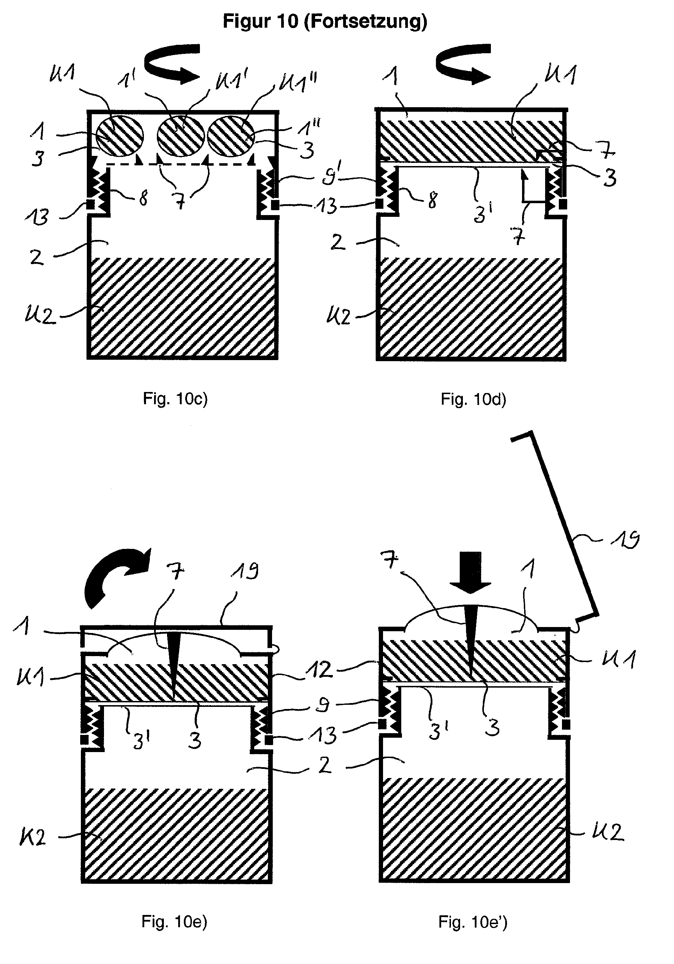

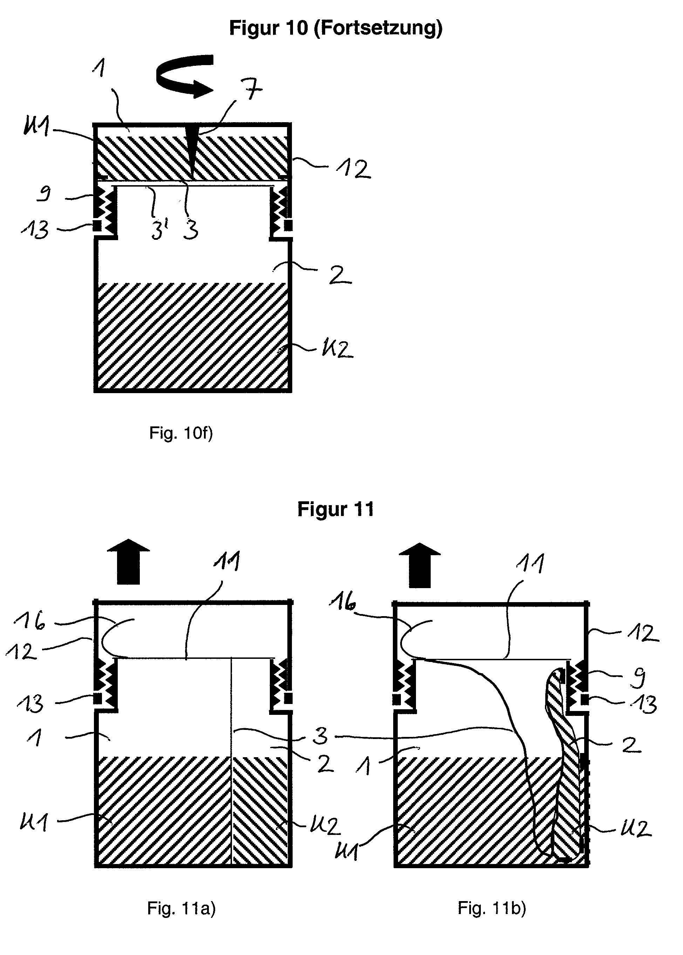

Figur 10 zeigt eine bevorzugte Ausführungsform der Ausführungsform **P2.** Hierbei bildet die eine Kammer 1 einen Teil des Deckels 12 einer Flasche 5. Figuren 10a)-f) zeigen hierbei unterschiedliche bevorzugte Anordnungen.
In Figur 10a) sind die Schneidmittel 7 mit der Wandung 8 verbunden oder liegen auf dieser auf, beispielsweise in Form eines Ringes und sind auf die Trennwand 3 der Kammer 1,2 gerichtet. Durch Entfernen der Sicherheitslasche 13 kann der Deckel 12 und damit die Kammer 1,2 über das Gewinde 9' durch Drehen auf die Schneidmittel 7 hin bewegt werden. Bei Kontakt der Schneidmittel 7 mit der Trennwand 3, die aus einem durchtrennbaren Material gefertigt ist, wird diese durchschnitten, so dass sich die Komponenten **K1, K2** mischen und/oder reagieren können. Wenn die Schneidmittel 7 exzentrisch in Bezug auf die Drehachse des Deckels 12 angeordnet sind -wie in Fig. 10a) gezeigt- wird durch weiteres Drehen des Deckels einen kurvenförmiger Einschnitt in der Trennwand 3 erzeugt, so dass die Trennwand wegklappen oder gar ausgeschnitten werden kann, was für die Mischung der Komponenten **K1, K2** sehr vorteilhaft ist.
In Figur 10b) sind mehrere Schneidmittel 7 über die Öffnung der Flasche verteilt angeordnet. Zwischen den Schneidmittel sind Durchlassöffnungen für die Komponente **K1, K2** in der Kammer 1,2 vorhanden. Typischerweise wird diese Art durch ein gegen die Trennwand gerichtete Spitzen aufweisendes Netz oder Lochplatte erreicht, welche auf der Wandung 8 aufliegt oder damit verbunden ist. Durch Entfernen der Sicherheitslasche 13 kann der Deckel 12 und damit die Kammer 1,2 über das Gewinde 9' durch Drehen auf die Schneidmittel 7 hin bewegt werden. Bei Kontakt der Schneidmittel 7 mit der Trennwand 3, die aus einem durchtrennbaren Material gefertigt ist, wird diese durchschnitten, so dass sich die Komponenten **K1, K2** mischen und/oder reagieren können. Das Vorhandensein mehrerer derart angeordneter Schneidmittel 7 weist den Vorteil auf, dass gleichzeitig die Trennwand 3 an mehreren Orten gleichzeitig perforiert wird und dadurch die Trennwand effizient zerstört wird.
In Figur 10c) ist die Komponente **K1** in verschiedenen Kammern 1, 1', 1" abgepackt und bilden einen Teil des Deckels 12. Diese Kammern 1, 1', 1" können gefüllte Kugeln oder Beutel, welche aus einem durchtrennbaren oder brechbaren Material gefertigt sind, sein. Weiterhin ist es grundsätzlich möglich, dass diese Kammern 1, 1', 1" unterschiedliche Komponenten K1, K1', K1" enthalten können. So wären beispielsweise drei- oder mehrkomponentige Haftvermittlerzusammensetzungen derart realisierbar, die miteinander nicht lagerfähig oder zu schlechterer Haftvermittlereigenschaften führen würden. Es sind mehrere Schneidmittel 7 über die Öffnung der Flasche verteilt angeordnet. Zwischen den Schneidmittel sind Durchlassöffnungen für die Komponente **K1** in der Kammer 1 vorhanden. Typischerweise wird diese Art durch ein gegen die Trennwand gerichtete Spitzen aufweisendes Netz oder Lochplatte erreicht, welche auf der Wandung 8 aufliegt oder damit verbunden ist. Durch Entfernen der Sicherheitslasche 13 kann der Deckel 12 und damit die Kammer 1 über das Gewinde 9' durch Drehen auf die Schneidmittel 7 hin bewegt werden. Bei Kontakt der Schneidmittel 7 mit der Trennwand 3 wird diese durchschnitten oder gebrochen, so dass sich die Komponenten **K1, K2** mischen und/oder reagieren können.
In Figur 10d) ist die Komponente **K1** in einer Kammer 1, welche aus einer durchtrennbaren Folie gefertigt ist, gelagert und die einen Teil des Deckels 12 bildet. Die andere Kammer 2 ist mit einer Trennwand 3' abgedichtet. In beiden Kammern sind Schneidmittel 7 nahe an den zwei Trennwänden 3, 3' angebracht. Durch Entfernen der Sicherheitslasche 13 kann der Deckel 12 über das Gewinde 9' gedreht werden, wodurch sich die Schneidmittel 7 aufeinander zu bewegen und hierbei die Trennwände 3, 3' durchschneiden, so dass sich die Komponenten **K1, K2** mischen und/oder reagieren können. Diese Ausführungsform besitzt den Vorteil, dass beide Kammern 1 und 2 mit der jeweiligen Komponente **K1, K2** befüllt werden können und separat voneinander dicht gelagert werden können.
In Figur 10e) ist eine Ausführungsform gezeigt, in welcher die eine Kammer 1 einen Teil des Deckels 12 bildet, der typischerweise mit einem Gewinde 9 mit der Flasche verbunden ist, und wobei der Deckel eine aufklappbare Schutzabdeckung 19 aufweist. Unter dieser Schutzabdeckung liegt die eine Kammer 1. Diese Kammer ist aus einem verformbaren und durchtrennbaren Material gefertigt, beispielsweise eine Kunststofffolie, einer Metallfolie oder einer Verbundfolie. An der Innenseite der Kammer ist auf der der Schutzabdeckung zugewanden Seite ein Schneidmittel 7 angebracht. Dieser Teil der Kammer weist typischerweise ein Ausbuchtung gegen aussen auf. Beim gewollten Mischen wird die Schutzabdeckung 19 aufgeklappt -dargestellt in Fig. 10e')- und anschliessend auf die Ausbuchtung gedrückt, wodurch das Schneidmittel 7 auf die Trennwände 3, 3' gedrückt wird, so dass diese einreissen und sich die Komponenten **K1, K2** mischen und/oder reagieren können.
Die in Figur 10f) beschriebene Ausführungsform ist sehr ähnlich zu derjenigen von Figur 10e) mit der Abdeckung. Hier ist die eine Kammer 1 ein Teil des Deckels 12. Die Kammer ist aus einem durchtrennbaren Material gefertigt. Die andere Kammer 2 ist durch eine Trennwand 3 abgeschlossen, welche ebenfalls aus einem durchtrennbaren Material gefertigt ist. In ungeöffnetem Zustand sind die beiden Wände 3, 3', welche die zwei Kammern 1,2 abgrenzen sehr nahe, bevorzugt in Kontakt miteinander, angeordnet. Durch Entfernen der Sicherheitslasche 13 und Drehen des Deckels 12 kann dieser mit der Kammer 1,2 sowie das Schneidmittel 7 über das Gewinde 9' auf die Trennwand 3 hin bewegt werden. Bei Kontakt der Schneidmittel 7 mit den Trennwänden 3, werden diese durchschnitten, so dass sich die Komponenten **K1, K2** mischen und/oder reagieren können. Auch diese Ausführungsform besitzt den Vorteil, dass beide Kammern 1 und 2 mit der jeweiligen Komponente **K1, K2** befüllt werden können und separat von einander dicht gelagert werden können.

Figur 11 zeigt eine bevorzugte Ausführungsform der Ausführungsform **P4.** Hierbei sind die zwei Kammern 1,2 durch eine herausreissbare Trennwand voneinander getrennt. In Figur 11a) ist diese Trennwand 3 weiterhin mit der Wandung 8 respektive 8' der jeweiligen Kammer 1,2 verbunden und bildet damit eine Abdeckung 11 der Öffnung 10. Beim Herausreissen wird zuerst mittels einer lasche 16 die Abdeckung 11 geöffnet. Danach wird die Trennwand 3 mittels der Sollbruchstellen, die sich dort befinden, wo die Trennwand mit der Innenwand der Kammern 1,2 verbunden sind, herausgerissen, so dass sich die Komponenten **K1, K2** mischen und/oder reagieren können. Anschliessend kann der Deckel wieder aufgeschraubt werden und beispielsweise geschüttelt werden. Weiterhin kann zur Applikation ein Filz oder Schwamm auf die Öffnung 10 angebracht, insbesondere mit Hilfe des Gewindes 9 aufgeschraubt werden.
In Figur 11b) die herausreissbare Trennwand 3 derart gestaltet, dass sie an der Basis der Kammern 1,2 eine Reisslasche 16 aufweist. Diese Reisslasche 16 ist weiterhin mit der Abdeckung 11 verbunden, welche die Öffnung 10 der Flasche verschliesst. Nach Entfernen des Deckels 12 kann die Abdeckung 11 entfernt werden und anschliessend an der Reisslasche 16 gezogen werden oder direkt an der lasche 16, so dass sich die Trennwand 3 von unten her durch Abschälung von den Innenwänden der Kammern an den Sollbruchstellen ablöst, so dass sich die Komponenten **K1, K2** mischen und/oder reagieren können. Die Trennwand kann beispielsweise durch leichtes Anschweissen eines Folienbandes an die Innenwandung einer Flasche hergestellt werden. Die Reisslasche 16 ist typischerweise der Rest dieses Folienbandes.

In allen Figuren kann die erste Komponente **K1** in der ersten Kammer 1 und die zweite Komponente **K2** in der zweiten Kammer 2 oder aber die erste Komponente **K1** in der zweiten Kammer 2 und die zweite Komponente **K2** in der ersten Kammer 1 vorhanden sein.
Die Grösse der Kammern ist bevorzugt dergestalt, dass mindestens eine Kammer 1,2 ein grösseres Volumen aufweist, als das Volumen der darin vorhandenen Komponente **K1, K2.** Insbesondere ist zu bevorzugen, dass das nicht mit der dieser Komponente belegte Volumen mindestens dem Volumen der anderen Komponente entspricht.
Weiterhin liegt das Volumenverhältnis **K1/K2** der ersten Komponente **K1** zu der zweiten Komponente **K2** zwischen 1000/1 und 1/1000, insbesondere zwischen 200/1 bis 10/1 oder zwischen 1/200 bis 1/10. Bevorzugt liegt das Volumenverhältnis **K1/K2** zwischen 200/1 bis 20/1 oder zwischen 1/200 bis 1/20.

Obwohl die Komponente **K1** eine verbesserte Lagerstabilität aufweist, können die Wände der Kammern aus einem oder mehreren Materialien, welche gegen Diffusion von Wasser in flüssigem oder gasförmigem Zustand dicht oder zumindest so undurchlässig, dass die gewünschte Lagerstabilität nicht beeinträchtigt wird. Insbesondere eignen sich hierfür Aluminium oder Glas oder Verbundwerkstoffe. So kann beispielsweise die Komponente 1 in einem Aluminiumbeutel oder einem mit einem Aluminium beschichteten Kunststoffbeutel gelagert werden. Diese Art von Kammer hat den Vorteil, dass die Wand überall durchtrennbar ist, und deshalb keine genaue Positionierung des Beutels bedingt. Insbesondere eignen sich solche Beutel für die Ausführungsformen gemäss der Figur 10.

Die Packung 6 wird durch Befüllen der Kammern 1 und 2, mit den Komponenten **K1, K2,** gegebenenfalls gefolgt durch das Zusammensetzen der Verpackung, erstellt. Die Packung weist eine gute Lagerstabilität auf, typischerweise von mindestens 6 Monaten, insbesondere mindestens 9 Monaten. Wenn die Packung 6 zur Aufbringung eines Haftvermittlers verwendet werden will, kann sie gezielt aktiviert werden. Hierzu muss die Trennwand 3 entfernt oder durchtrennt werden, so dass die Komponenten **K1, K2** min Kontakt geraten, mischen und/oder reagieren können. Das Mischen kann durch Schütteln unterstützt werden. Anschliessend wird die derart vorbereitete Haftvermittlerzusammensetzung der Packung 6 entnommen und auf eine zu verklebende oder abzudichtende Oberflächen appliziert. Es kann je nach Art der gewählten Bestandteile in den Komponenten **K1** und **K2** nötig sein, dass zwischen Kontaktierung der zwei Komponenten und der Applikation eine kurze Zeit, von typischerweise weniger als einer halben Stunde, gewartet werden muss, um eine optimale Haftvermittlerwirkung zu erreichen. Bevorzugt wird die Haftvermittlerzusammensetzung jedoch sofort aufgetragen. Die Oberfläche kann aus sehr unterschiedlichem Material bestehen, insbesondere bevorzugt sind Glas, Glaskeramiken, Metalle, Lacke sowie Kunststoffe. Es kann gegebenenfalls nötig sein, dass die Oberfläche vor der Applikation des Haftvermittlers mit weiteren chemischen, physikalischen oder phyiskochemischen Methoden vorbehandelt wird. Zur Applikation wird vorzugsweise auf eine Packung 6 mit Öffnung 10 eine poröse Abdeckung 20, insbesondere ein Filz oder ein Schwamm angebracht. Eine solche poröse Abdeckung 20 ist typischerweise auf einem Formteil befestigt, welcher im Randbereich einen Verbund mit der Verpackung gewährleistet. Dieser Verbund wird bevorzugt über eine Schraubverbindung über ein Gewinde 9 erreicht. Die zweikomponentige Haftvermittlerzusammensetzung wird in einer Schichtdicke von weniger als 1 Millimeter aufgetragen, typischerweise in einer Schichtstärke von weniger als 100 Mikrometer. Wenn die Haftvermittlerzusammensetzung Füllstoffe und/oder Bindemittel enthält ist eine Schichtstärke zwischen 1 und 100 Mikrometer, insbesondere zwischen 1 und 20 Mikrometer, bevorzugt. Falls die Haftvermittlerzusammensetzung keine Füllstoffe und kein Bindemittel enthält, ist eine Schichtstärke zwischen einer molekularen Monolage der Verbindung **A** und 50 Mikrometer, insbesondere zwischen 2 Nanometer und 10 Mikrometer, insbesondere zwischen 10 Nanometer und 1 Mikrometer, bevorzugt.

### Bezugszeichenliste

- K1: erste Komponente
- K2: zweite Komponente
- 1: erste Kammer
- 2: zweite Kammer
- 3: Trennwand
- 3': Dichtung
- 4: Aussenwand
- 4': Aussenwand
- 5: Verpackung
- 6: Packung
- 7: Schneidmittel
- 8: Wandung
- 8': Wandung
- 9: Gewinde
- 9': Gewinde
- 10: Öffnung
- 11: Abdeckung
- 12: Deckel
- 13: Sicherheitslasche
- 14: Fixierungsmittel
- 15: Mischhilfsmittel
- 16: Reisslasche
- 17: Mischungshilfsmittel
- 18: Klemmverschluss
- 19: Schutzabdeckung
- 20: poröse Abdeckung
- 21: Blase

### Beispiele

**Tabelle1 Verwendete Organoalkoxysilan.**

| Abkürzung | Organoalkoxysilan |
|---|---|
| A1110 | 3-Aminopropyl-trimethoxysilan |
| A1120 | N-(2-Aminoethyl)-3-aminopropyl-trimethoxysilan |
| A1130 | 3-[2-(2-Aminoethylamino)-ethylamino]-propyl-trimethoxysilan |
| A1170 | Bis(trimethoxysilylpropyl)amin |
| Dy1122 | Bis(triethoxysilylpropyl)amin |
| A187 | 3-Glycidyloxypropyl-trimethoxysilan |
| GLYEO | 3-Glycidyloxypropyl-triethoxysilan |
| A189 | 3-Mercaptopropyl-trimethoxysilan |
| A174 | 3-Methacryloxypropyl-trimethoxysilan |
| MTMS | Methyltrimethoxysilan |

Des weiteren wurde das Reaktionsprodukt **RP1** hergestellt aus 3-Glycidyloxypropyl-trimethoxysilan und N-(2-Aminoethyl)-3-aminopropyl-trimethoxysilan, indem 1 Mol A1120 mit 3 Mol A187 gemischt wurden. Unmittelbar nach dem Mischen konnte der Umsatz mit IR überprüft werden. Die für die Epoxy-Gruppe charakteristische Bande bei ca. 910 cm⁻¹ ist zwar unmittelbar nach dem Mischen noch nachweisbar, verschwindet aber schnell.

**Tabelle2 Verwendete Tenside.**

| Abkürzung | Tensid | Lieferant |
|---|---|---|
| "Surfynol" | Surfynol® 61 | Air Products |
| "Soprophor" | Soprophor BSU | Rhodia, Deutschland |
| "FM33" | Antarox FM33 | Rhodia, Deutschland |
| "AE 01" | EnviroGem® AE 01 | Air Products |
| "AE 02" | EnviroGem®AE 02 | Air Products |
| "Hydropalat 120" | Hydropalat® 120 | Cognis, Deutschland |
| "FSO-100" | Zonyl® FSO-1 00 | ABCR, Deutschland |
| "Byk 333" | BYK®-333 | Byk-Chemie GmbH, Deutschland |

In Tabelle 3 wurde das Verhältnis von Organoalkoxysilan zu Tensid variiert. Als Organoalkoxysilan wurde das Reaktionsprodukt RP1 verwendet und mit unterschiedlichen Tensiden kombiniert.
In der ersten Referenzserie ***Ref.S1*** wurde kein Tensid, d.h. reines Organoalkoxysilan, verwendet.

Das jeweilige Tensid wurde zu 2.5 g des Reaktionsproduktes **RP1** in Glassgefäss (Durchmesser 12 mm, 4 cm hoch, Vol. ca. 4.5 ml, mit Kunststoff-Schraubdeckel), welches vorgängig in einem Ofen bei 200°C während einem Tag getrocknet und bei 25°C/50% rel. Luftfeuchtigkeit auf Raumtemperatur abgekühlt wurde, zugegeben. Anschliessend wurden die so gefüllten Gefässe mit Deckel verschlossen und in einem Ofen (Ehret, TK/L 4061) mit Umluft bei 50°C gelagert. Während 30 Tagen wurden täglich die Proben visuell beurteilt. In Tabelle 2 ist die Stabilität angegeben und zwar durch Angabe der Anzahl Tage, bis festgestellt wurde, dass die Probe gelierte. Wenn nach dem 30. Tag die Probe immer noch einwandfrei war, wurde der Wert >30 angegeben.

**Tabelle 3. Stabilität (Anzahl Tage bis geliert) von Organoalkoxysilan-Tensid Mischungen bei 50°C im geschlossenen Gefäss.**

| | **RP1**:Tensid [g:g] | | | | | | |
|---|---|---|---|---|---|---|---|
| Tensid | 1:0 | 20:1 | 10:1 | 5:1 | 2:1 | 1:1 | 1:2 |
| | ***Ref.S1*** | ***BS1*** | ***BS2*** | ***BS3*** | ***BS4*** | ***BS5*** | ***BS6*** |
| Surfynol | 1 | 1 | 1 | 2 | >30 | >30 | >30 |
| Soprophor | 1 | 1 | 1 | 1 | >10 | >30 | >30 |
| AE 01 | 1 | 1 | 3 | 3 | 10 | >30 | >30 |
| Hydropalat 120 | 1 | 1 | 1 | 2 | >30 | >30 | >30 |
| Anteil **S** an Zusammensetzung [Gew.-%] | 100 | 95 | 91 | 83 | 66 | 50 | 33 |

In Tabelle 4 wurden unterschiedliche Silane und unterschiedliche Tenside in einem Mischverhältnis **S:T** von 2.125:1, entsprechend einem Anteil des Organoalkoxysilan **S** von 68 Gew.-% an dem Gesamtgewicht der gesamten Zusammensetzung, wie vorher beschrieben gemischt. In dieser Versuchsreihe wurde jedoch mittels Bohrer ein Loch von 1 mm in den Deckel gebohrt. Die Lagerung und Bestimmung der Stabilität erfolgt wie für die Versuche der Tabelle 3. Die Vergleichsversuchserie ***Ref.S2*** erfolgte ohne Zugabe von Tensiden, d.h. als reine Organoalkoxysilane.

**Tabelle 4. Stabilität (Anzahl Tage bis geliert) von Organoalkoxysilan-Tensid Mischungen bei 50°C im Gefäss mit Loch im Deckel.**

| | ***BS7*** | ***BS8*** | ***BS9*** | ***Ref.S2*** |
|---|---|---|---|---|
| | Surfynol | AE 01 | Hydropalat 120 | - |
| A1130 | 7 | 1 | 6 | 1 |
| A1170 | 1 | 4 | 1 | 1 |
| MTMS | >30 | >30 | 10 | 1 |

In einer weiteren Versuchsserie wurden die Lagerstabilitäten von Reaktionsprodukten aus Aminosilanen und Epoxysilanen enthaltenen Zusammensetzungen mit unterschiedlichen Tensiden verglichen.
Es wurden hierbei das bereits beschriebene Reaktionsprodukt **RP1** verwendet. Weiterhin wurde ein Reaktionsprodukt **RP2** aus 3-Glycidyloxypropyltrimethoxysilan und 3-[2-(2-Aminoethylamino)-ethylamino]-propyl-trimethoxysilan hergestellt, indem 1 Mol A1130 mit 6.6 Mol A187 gemischt wurden.
In Tabelle 5 wurden **RP1** bzw. **RP2** mit unterschiedlichen Tensiden in einem Mischverhältnis **S:T** von 2.125:1, entsprechend einem Anteil des Organoalkoxysilan **S** von 68 Gew.-% an dem Gesamtgewicht der gesamten Zusammensetzung, wie vorher beschrieben gemischt. In dieser Versuchsreihe wurde das Gefäss mit verschlossenem Deckel (ohne Loch wie für Tabelle 4) bei 50°C, wie bereits beschrieben im Ofen, oder bei 23°C/50% rel. Luftfeuchtigkeit gelagert. Die Bestimmung der Stabilität erfolgt wie für die Versuche der Tabelle 3. Die Vergleichsversuchserie ***Ref.S3*** erfolgte ohne Zugabe von Tensiden, d.h. als reine Organoalkoxysilane.

**Tabelle 5. Stabilität (Anzahl Tage bis geliert) von Organoalkoxysilan-Tensid Mischungen bei 50°C und 23°C im verschlossenen Gefäss.**

| | | **RP1** | | **RP2** | |
|---|---|---|---|---|---|
| | Tensid | 23°C | 50°C | 23°C | 50°C |
| ***BS10*** | Surfynol | >90 | >90 | >90 | >90 |
| ***BS11*** | Soprophor | 84 | >90 | 84 | >90 |
| ***BS12*** | FM33 | 25 | >90 | 74 | 74 |
| ***BS13*** | AE 01 | >90 | 29 | >90 | 1 |
| ***BS14*** | AE 02 | >90 | 1 | >90 | >90 |
| ***BS15*** | Hydropalat 120 | >40 | >40 | >40 | >40 |
| ***Ref.S3*** | Ohne Tensid | 9 | 1 | 32 | 8 |

In Tabelle 6 wurden die Mischbarkeit der Komponente **K1** in der Komponente **K2** ermittelt. Hierbei wurden 0.5 g der jeweiligen Mischung Tensid / Reaktionsproduktes **RP1** als Komponente **K1** zu 25 g einer 1 Gew.-% Essigsäure als Komponente **K2** mittels Pipette zugegeben. Die in Tabelle 6 angegebene Beurteilung erfolgt nach folgendem Schlüssel:
"-" Bildung von Tropfen am Grund des Gefässes (Phasenseparierung)
"+" die zuerst gebildeten Tropfen lösen sich schnell auf (< 1 Min.)
"++" spontanes Auflösen während dem Zugeben

**Tabelle 6. Mischbarkeit von Komponente K1 und K2.**

| | **RP1**:Tensid [g:g] | | | | | | |
|---|---|---|---|---|---|---|---|
| Tensid | 1:0 | 20:1 | 10:1 | 5:1 | 2:1 | 1:1 | 1:2 |
| | ***Ref.S4*** | ***BS16*** | ***BS17*** | ***BS18*** | ***BS19*** | ***BS20*** | ***BS21*** |
| Surfynol | - | - | - | ++ | ++ | ++ | ++ |
| Soprophor | - | ++ | ++ | ++ | ++ | ++ | ++ |
| AE 01 | - | + | + | + | + | + | + |
| Hydropalat 120 | - | - | - | + | ++ | ++ | ++ |

In Tabelle 7 ist das Verhalten von unterschiedlichen Organoalkoxysilane angegeben. Die Bewertungsangaben sind entsprechend zu den in Tabelle 6 angegebenen.

**Tabelle 7. Zusammensetzungen von wässrigen Haftvermittlerzusammensetzungen.**

| | **Ref.1** | **Ref.2** | **B1** | **Ref.3** | **Ref.4** | **B2** | **Ref.5** | **Ref.6** | **B3** | **Ref.7** | **B4** |
|---|---|---|---|---|---|---|---|---|---|---|---|
| **K1** | | | | | | | | | | | |
| A187 [g] | 0.5 | 0.5 | 0.33 | | | | | | | | |
| A189 [g] | | | | 0.5 | 0.5 | 0.33 | | | | | |
| A174 [g] | | | | | | | 0.5 | 0.5 | 0.33 | | |
| A1170[g] | | | | | | | | | | 0.5 | 0.33 |
| | | | | | | | | | | | |
| Surfynol[g] | | | 0.17 | | | 0.17 | | | 0.17 | | 0.17 |
| | | | | | | | | | | | |

| **K2** | | | | | | | | | | | |
|---|---|---|---|---|---|---|---|---|---|---|---|
| H₂O [g] | 25.0 | 24.75 | 24.75 | 25.0 | 24.75 | 24.75 | 25.0 | 24.75 | 24.75 | 25.0 | 24.75 |
| HAc* [g] | | 0.25 | 0.25 | | 0.25 | 0.25 | | 0.25 | 0.25 | | 0.25 |
| **K1+K2**[g] | 25.5 | 25.5 | 25.5 | 25.5 | 25.5 | 25.5 | 25.5 | 25.5 | 25.5 | 25.5 | 25.5 |
| Löslichkeit | - | - | ++ | - | - | ++ | - | - | ++ | - | ++ |

| | | | | | | | | | | | |
|---|---|---|---|---|---|---|---|---|---|---|---|
| * HAc = Essigsäure (100%) | | | | | | | | | | | |

**Tabelle 8. Zusammensetzungen von wässrigen Haftvermittlerzusammensetzungen.**

| | **B5** | **B6** | **B7** | **B8** | **Ref.8** | **Ref.9** |
|---|---|---|---|---|---|---|
| **K1** | | | | | | |
| A1170[g] | 0.75 | | | | | |
| Dy1122 [g] | | 0.75 | | | | |
| A187 [g] | | | 0.75 | | 0.75 | |
| GLYEO [g] | | | | 0.75 | | 0.75 |
| Byk 333 [g] | 0.25 | 0.25 | 0.25 | 0.25 | 0.25 | 0.25 |
| FSO-100 [g] | 0.05 | 0.05 | 0.05 | 0.05 | 0.05 | 0.05 |

| **K2** | | | | | | |
|---|---|---|---|---|---|---|
| HAc* [g] | 0.25 | 0.25 | 0.25 | 0.25 | | |
| Wasser [g] | 48.7 | 48.7 | 48.7 | 48.7 | 48.95 | 48.95 |
| K1 + K2[g] | 50 | 50 | 50 | 50 | 50 | 50 |
| Löslichkeit | ++ | ++ | ++ | ++ | - | - |

| | | | | | | |
|---|---|---|---|---|---|---|
| * HAc = Essigsäure (100%) | | | | | | |

Die in Tabelle 8 hergestellten wässrigen Haftvermittlerzusammensetzungen wurden nach der in Tabellen 9 und 10 als Hydrolysezeit angebenen Zeit nach dem Mischen der Komponenten **K1** und **K2** mittels eines damit getränkten Zellulosetuchs (Teia®, Tela-Kimberly Switzerland GmbH) auf Flachglass (Zinnseite, Rocholl GmbH, Deutschland), beziehungsweise auf den Keramikrand einer ESG BMW-Rückscheibe von Saint-Gobain Sekurit ("Keramik"), aufgetragen. Nach 10 Minuten Ablüftezeit wurde der einkomponentige feuchtigkeitshärtende Polyurethanklebstoff Sikaflex®-250 DM-2 ("DM2") oder SikaTack®-Move Goes Cool ("MGC"), welche beide Polyurethanprepolymere mit Isocyanatgruppen enthalten und bei Sika Schweiz AG kommerziell erhältlich sind, als flache Dreickesraupe mit einer Kartuschenpresse und einer Düse aufgetragen und während 7 Tagen bei 23°C und 50% rel. Luftfeuchtigkeit (Klimalagerung "KL") ausgehärtet. Anschliessend wurden die Proben während weiteren 7 Tagen bei 23°C in Wasser gelagert (Wasserlagerung "WL"). und schliesslich während weiteren 7 Tagen bei 70°C und 100 % rel. Luftfeuchtigkeit (Kataplasma-Lagerung "CP") gelagert.

Die Haftung wurde mittels Raupentest beurteilt.

### Haftungstest ("Raupentest")

Die Haftung des Klebstoffes wurde mittels 'Raupentest' getestet. Hierbei wird am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch Abschätzen des kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)
Testresultate mit Bewertung von 4 oder 5 gelten als ungenügend.

**Tabelle 9. Haftung von Klebstoffen auf wässrigen Haftvermittlerzusammensetzungen nach unterschiedlicher Hydrolysezeit auf Flachglass.**

| | Hydrolysezeit: 10 Min. | | | | | | Hydrolysezeit: 1 h | | | | | | Hydrolysezeit: 2h | | | | | |
|---|---|---|---|---|---|---|---|---|---|---|---|---|---|---|---|---|---|---|
| | DM-2 | | | MGC | | | DM2 | | | MGC | | | DM-2 | | | MGC | | |
| | KL | WL | CP | KL | WL | CP | KL | WL | CP | KL | WL | CP | KL | WL | CP | KL | WL | CP |
| **B5** | 1 | 1 | 1 | 1 | 2 | 1 | 2 | 2 | 2 | 2 | 2 | 1 | 2 | 1 | 1 | 3 | 3 | 1 |
| **B6** | 1 | 1 | 1 | 1 | 1 | 1 | 1 | 1 | 1 | 1 | 1 | 1 | 1 | 1 | 1 | 1 | 2 | 1 |
| **B7** | 2 | 2 | 1 | 2 | 3 | 1 | 2 | 3 | 1 | 2 | 4 | 1 | 1 | 2 | 2 | 1 | 4 | 1 |
| **B8** | 2 | 3 | 2 | 3 | 4 | 1 | 1 | 2 | 1 | 3 | 4 | 2 | 1 | 3 | 1 | 1 | 3 | 1 |
| **Ref.8** | 4 | 4 | 4 | 5 | 5 | 4 | 2 | 2 | 2 | 5 | 5 | 4 | 1 | 1 | 2 | 4 | 5 | 4 |
| **Ref.9** | 5 | 4 | 4 | 5 | 5 | 4 | 5 | 5 | 4 | 5 | 5 | 4 | 3 | 4 | 4 | 5 | 5 | 4 |

**Tabelle 10. Haftung von Klebstoffen auf wässrigen Haftvermittlerzusammensetzungen nach unterschiedlicher Hydrolysezeit auf Keramik.**

| | Hydrolysezeit: 10 Min. | | | | | | Hydrolysezeit: 1 h | | | | | | Hydrolysezeit: 2h | | | | | |
|---|---|---|---|---|---|---|---|---|---|---|---|---|---|---|---|---|---|---|
| | DM-2 | | | MGC | | | DM2 | | | MGC | | | DM-2 | | | MGC | | |
| | KL | WL | CP | KL | WL | CP | KL | WL | CP | KL | WL | CP KL | | WL | CP | KL | WL | CP |
| **B5** | 1 | 1 | 1 | 1 | 1 | 1 | 1 | 1 | 1 | 1 | 1 | 1 | 1 | 1 | 2 | 1 | 1 | 1 |
| **B6** | 1 | 1 | 1 | 1 | 1 | 1 | 1 | 1 | 2 | 1 | 1 | 1 | 1 | 1 | 2 | 1 | 1 | 1 |
| **B7** | 1 | 1 | 1 | 2 | 2 | 1 | 1 | 1 | 1 | 2 | 2 | 1 | 1 | 1 | 2 | 2 | 2 | 1 |
| **B8** | 1 | 2 | 2 | 2 | 2 | 1 | 1 | 1 | 2 | 1 | 2 | 1 | 1 | 1 | 2 | 1 | 1 | 1 |
| **Ref.8** | 5 | 5 | 5 | 5 | 5 | 4 | 4 | 4 | 5 | 5 | 5 | 4 | 2 | 2 | 2 | 5 | 5 | 3 |
| **Ref.9** | 5 | 5 | 5 | 5 | 5 | 5 | 5 | 5 | 5 | 5 | 5 | 5 | 5 | 4 | 5 | 5 | 5 | 5 |

Es wurden Organoalkoxysilanzusammensetzungen aus A1110 und unterschiedlichen Tensiden in den in Tabelle 11 angegebenen Verhältnissen hergestellt und als eine erste Komponente **K1** eines wässrigen Primers verwendet. Die zweite Komponente **K2** bestand aus Wasser und 1 Gew.-% Essigsäure. 1.05 g der Komponente **K1** wurde in 49 g der Komponente **K2** gegeben und geschüttelt. Diese Mischung wurden anschliessend mit einem mittels eines damit getränkten Zellulosetuchs (Tela®, Tela-Kimberly Switzerland GmbH) auf den Keramikrand einer VSG Frontscheibe eines Mitsubishi Space Wagon von Splintex aufgetragen. Nach 10 Minuten Ablüftezeit wurde der einkomponentige feuchtigkeitshärtende Polyurethanklebstoff Sikaflex®-250 DM-2 oder Sikaflex®-250 HMV-2+, welche beide Polyurethanprepolymere mit Isocyanatgruppen enthalten und bei Sika Schweiz AG kommerziell erhältlich sind, als Rundraupe mit einer Kartuschenpresse und einer Düse aufgetragen und während 4 Tagen bei 23°C und 50% rel. Luftfeuchtigkeit ausgehärtet. Die Haftung wurde mittels des bereits beschriebenen Raupentest beurteilt.

**Tabelle 11. Wässrige Primer mit Silan/Tensid-Mischung in Komponente K1. Haftung von Sikaflex® 250 DM-2**

| | Sikaflex® 250 DM-2 | | | | |
|---|---|---|---|---|---|
| | **A1110**:Tensid [g:g] | | | | |
| Tensid | 1:0 | 2:1 | 1:1 | 1:2 | 1:10 |
| | ***Ref.S5*** | ***BS22*** | ***BS23*** | ***BS24*** | ***Ref.S6*** |
| Surfynol | 2 | 1 | 2 | 3 | 3 |
| Soprophor | 2 | 1 | 2 | 2 | 3 |
| Hydropalat 120 | 2 | 1 | 2 | 2 | 3 |
| Anteil **S** an Komp. **K1** [Gew.-%] | 100 | 66 | 50 | 33 | 9 |

**Tabelle 12. Wässrige Primer mit Silan/Tensid-Mischung in Komponente K1. Haftung von Sikaflex® 250 HMV-2+**

| | Sikaflex® 250 HMV-2+ | | | | |
|---|---|---|---|---|---|
| | **A1110:**Tensid [g:g] | | | | |
| Tensid | 1:0 | 2:1 | 1:1 | 1:2 | 1:10 |
| | ***Ref.S7*** | ***BS25*** | ***BS26*** | ***BS27*** | ***Ref.S8*** |
| Surfynol | 4 | 4 | 4 | 3 | 5 |
| Soprophor | 4 | 1 | 2 | 4 | 4 |
| Hydropalat 120 | 4 | 3 | 3 | 4 | 4 |
| Anteil **S** an Komp. **K1** [Gew.-%] | 100 | 66 | 50 | 33 | 9 |

## Patentansprüche

1. Wässrige zweikomponentige Haftvermittlerzusammensetzung bestehend aus einer ersten Komponente **K1** umfassend
mindestens ein Organoalkoxysilan **S** und
mindestens ein wasserfreies Tensid **T;**
und aus einer zweiten Komponente **K2** umfassend
mindestens Wasser und
mindestens eine Säure
und wobei die Säure in einer Menge vorhanden ist, dass nach dem Mischen der Komponenten **K1** und **K2** die resultierende Mischung sauer reagiert.

2. Wässrige zweikomponentige Haftvermittlerzusammensetzung gemäss Anspruch 1, **dadurch gekennzeichnet, dass** die Säure eine organische Säure, insbesondere eine Sulfonsäure oder Carbonsäure, insbesondere Essigsäure oder Ameisensäure.

3. Wässrige zweikomponentige Haftvermittlerzusammensetzung gemäss Anspruch 2, **dadurch gekennzeichnet, dass** die Säure bevorzugt eine aromatische Sulfonsäure, insbesondere p-Toluolsulfonsäure oder Dodecylbenzylsulfonsäure, ist.

4. Wässrige zweikomponentige Haftvermittlerzusammensetzung gemäss Anspruch 1, **dadurch gekennzeichnet, dass** die Säure eine anorganische Säure, insbesondere eine Säure mit einem Schwefel- oder Phosphoratom, ist.

5. Wässrige zweikomponentige Haftvermittlerzusammensetzung gemäss einem der vorhergehenden Ansprüche, **dadurch gekennzeichnet, dass** die Säure in einer Menge vorhanden ist, dass nach Mischen der Komponenten **K1** und **K2** die resultierende Mischung einen pH zwischen 3 und 5 aufweist.

6. Wässrige zweikomponentige Haftvermittlerzusammensetzung gemäss einem der vorhergehenden Ansprüche, **dadurch gekennzeichnet, dass** das Organoalkoxysilan **S** ein Aminosilan ist.

7. Wässrige zweikomponentige Haftvermittlerzusammensetzung gemäss Anspruch 6, **dadurch gekennzeichnet, dass** das Aminosilan eine Aminosilan der Formel (I) oder ein Reaktionsprodukt eines Aminosilans der Formel (I) mit einer Verbindung, welche mindestens eine funktionelle Gruppe enthält, welche mit primären oder sekundären Aminogruppen reagiert, ist 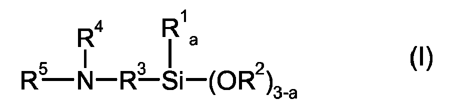 wobei R¹ für eine Alkylgruppe mit 1 bis 8 C-Atomen, bevorzugt für eine Methyl- oder für eine Ethylgruppe, insbesondere für eine Methylgruppe, steht;
R² für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
R³ für eine lineare oder verzweigte Alkylengruppe mit 1 bis 4 C-Atomen, insbesondere für eine Propylengruppe, steht,
R⁴ für H oder für eine lineare oder verzweigte Alkylengruppe mit 1 bis 10 C-Atomen oder für einen Substituent der Formel (II) steht, 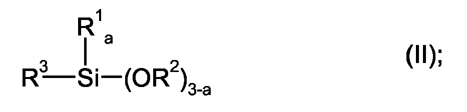 R⁵ für H oder für eine lineare oder verzweigte Alkylengruppe mit 1 bis 10 C-Atomen oder für eine lineare oder verzweigte Alkylengruppe mit 1 bis 10 C-Atomen mit weiteren Heteroatomen oder für einen Substituent der Formel (II) steht 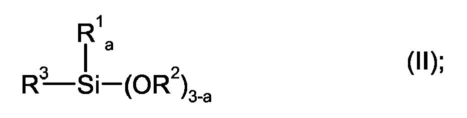 und wobei a für den Wert 0, 1 oder 2, insbesondere für 0 oder 1, bevorzugt für 0 steht.

8. Wässrige zweikomponentige Haftvermittlerzusammensetzung gemäss Anspruch 7, **dadurch gekennzeichnet, dass** Aminosilan ausgewählt ist aus der Gruppe umfassend Aminosilane der Formel (III), (IV) und (V)

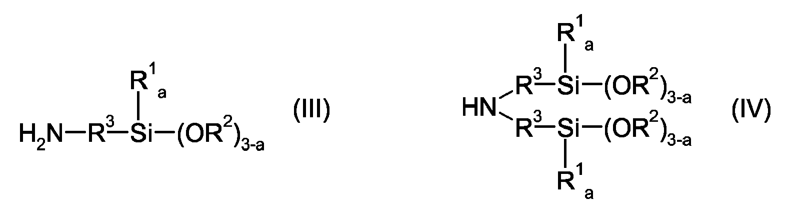

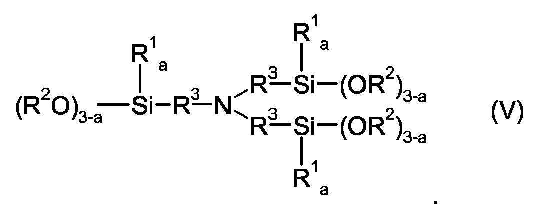

9. Wässrige zweikomponentige Haftvermittlerzusammensetzung gemäss Anspruch 7 oder 8, **dadurch gekennzeichnet, dass** das Aminosilan ein Reaktionsprodukt eines Aminosilans der Formel (III) oder (IV), wie sie in Anspruch 8 beschrieben sind, mit einer Epoxygruppen enthaltenden Verbindung ist.

10. Wässrige zweikomponentige Haftvermittlerzusammensetzung gemäss Anspruch 9, **dadurch gekennzeichnet, dass** die Epoxygruppen enthaltende Verbindung ein Epoxysilan, insbesondere ein Epoxysilan der Formel (VI), ist

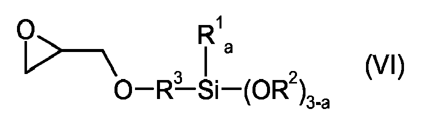

11. Wässrige zweikomponentige Haftvermittlerzusammensetzung gemäss einem der Ansprüche 7 bis 10, **dadurch gekennzeichnet, dass** a = 0 und R² für Methyl und R⁵ für Propylen steht.

12. Wässrige zweikomponentige Haftvermittlerzusammensetzung gemäss einem der Ansprüche 1 bis 5, **dadurch gekennzeichnet, dass** Organoalkoxysilane Silan **S** ein Organoalkoxysilan der Formel (VII) ist 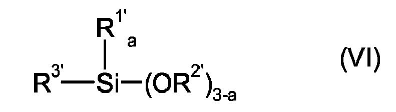 wobei R^{1'} für eine Alkylgruppe mit 1 bis 8 C-Atomen, bevorzugt für eine Methyl- oder für eine Ethylgruppe, insbesondere für eine Methylgruppe, steht;
R^{2'} für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
R^{3'} für eine lineare oder verzweigte Alkylkette mit 1 bis 20 C-Atomen, welche gegebenenfalls mit einer Epoxy- oder Vinyl- oder (Meth)acrylatgruppe substituiert ist, steht;
und wobei a für den Werte 0, 1 oder 2, insbesondere für 0 oder 1, bevorzugt für 0 steht.

13. Wässrige zweikomponentige Haftvermittlerzusammensetzung gemäss einem der vorhergehenden Ansprüche, **dadurch gekennzeichnet, dass** der Gewichtsanteil des Organoalkoxysilans **S ≥** 40 Gew.-%, bezogen auf das Gewicht der Komponente **K1,** beträgt.

14. Wässrige zweikomponentige Haftvermittlerzusammensetzung gemäss einem der vorhergehenden Ansprüche, **dadurch gekennzeichnet, dass** das Gewichtsverhältnis des Organoalkoxysilans **S** zu wasserfreien Tensid **T** (**S:T**) einen Wert von 20:1 bis 1:2, insbesondere 5:1 bis 1:2, bevorzugt 3:1 bis 2:3, aufweist.

15. Wässrige zweikomponentige Haftvermittlerzusammensetzung gemäss einem der vorhergehenden Ansprüche, **dadurch gekennzeichnet, dass** der Gewichtsanteil des Wassers ≥ 60 Gew.-%, bezogen auf das Gewicht der Komponente **K2,** beträgt.

16. Packung (6) bestehend aus
einer Verpackung (5), welche zwei durch mindestens eine Trennwand (3) voneinander getrennten Kammern (1,2) aufweist;
und
einer wässrigen zweikomponentigen Haftvermittlerzusammensetzung gemäss einem der Ansprüche 1 bis 15,
wobei die erste Komponente **K1** in der ersten Kammer (1) und die zweite Komponente **K2** in der zweiten Kammer (2) vorhanden ist.

17. Packung (6) gemäss Anspruch 16, **dadurch gekennzeichnet, dass** die Trennwand (3) aus einem Material gefertigt ist, das durch die Aufbringung von Druck bricht oder einreisst.

18. Wässrige Zusammensetzung erhalten durch Mischen der Komponenten **K1** und **K2** einer wässrigen zweikomponentigen Haftvermittlerzusammensetzung gemäss einem der Ansprüche 1 bis 15.

19. Verwendung einer wässrigen zweikomponentigen Haftvermittlerzusammensetzung gemäss einem der Ansprüche 1 bis 15 oder einer wässrigen Zusammensetzung gemäss Anspruch 18 als Vorbehandlungsmittel zur Verbesserung der Haftung eines darauf applizierten Kleb- oder Dichtstoffes.

20. Verfahren zum Vorbehandeln von Substratoberfläche umfassend die Schritte
a) Mischen der Komponente **K1** und **K2** einer zweikomponentigen Haftvermittlerzusammensetzung gemäss einem der Ansprüche 1 bis 15
b) Applizieren der so erhaltenen Mischung auf eine Substratoberfläche.

21. Verfahren zur Verklebung oder zum Abdichten umfassend die Schritte
i) Mischen der Komponente **K1** und **K2** einer zweikomponentigen Haftvermittlerzusammensetzung gemäss einem der Ansprüche 1 bis 15
ii) Applikation der so erhaltenen Mischung auf ein zu verklebendes oder abzudichtendes Substrat **S1**
iii) Applikation eines Klebstoffes oder Dichtstoffes auf die abgelüftete wässrige Haftvermittlerzusammensetzung, welche sich auf dem Substrat **S1** befindet
iv) Kontaktieren des Klebstoffs oder Dichtstoffes mit einem zweiten Substrat **S2;**
oder
i') Mischen der Komponente **K1** und **K2** einer zweikomponentigen Haftvermittlerzusammensetzung gemäss einem der Ansprüche 1 bis 15
ii) Applikation der so erhaltenen Mischung auf ein zu verklebendes oder abzudichtendes Substrat **S1**
iii') Applikation eines Klebstoffes oder Dichtstoffes auf die Oberfläche eines zweiten Substrates **S2**
iv') Kontaktieren des Klebstoffes oder Dichtstoffes mit der abgelüfteten wässrigen Haftvermittlerzusammensetzung, welche sich auf dem Substrat **S1** befindet;
oder
i") Mischen der Komponente **K1** und **K2** einer zweikomponentigen Haftvermittlerzusammensetzung gemäss einem der Ansprüche 1 bis 15
ii") Applikation der so erhaltenen Mischung auf ein zu verklebendes oder abzudichtendes Substrat **S1**
iii") Ablüften der zweikomponentigen Haftvermittlerzusammensetzung
iv") Applikation eines Klebstoffes oder Dichtstoffes zwischen die Oberflächen des Substrates **S1** und **S2,**
wobei das zweite Substrat **S2** aus demselben oder unterschiedlichem Material wie das Substrat **S1** besteht.

22. Verfahren gemäss Anspruch 21, **dadurch gekennzeichnet, dass** anschliessend an den Schritt iv) oder iv') oder iv") ein Schritt v) des Aushärtens des Klebstoffes oder Dichtstoffes anschliesst.

23. Verfahren gemäss Anspruch 21 oder 22, **dadurch gekennzeichnet, dass** der Klebstoff ein feuchtigkeitshärtender einkomponentiger Polyurethanklebstoff ist.

24. Verklebter oder abgedichteter Artikel, welcher durch ein Verfahren gemäss einem der Ansprüche 21 bis 23 erhalten wurde.

25. Verklebter oder abgedichteter Artikel gemäss Anspruch 24, **dadurch gekennzeichnet, dass** der Artikel ein Transportmittel, insbesondere ein Automobil, oder ein Anbauteil eines Transportmittels, insbesondere eines Automobils, ist.
